# EUROPEAN PATENT APPLICATION

(11) **EP 4 357 788 A1**
(43) Date of publication of application: **24.04.2024**
(21) Application number: 22842067.5
(22) Date of filing: 11.07.2022
(51) Int. Cl.: G01N 37/00, G01N 35/10, G01N 33/483, G01N 33/50, G01N 33/543, G01N 33/68, G01N 21/03, G01N 21/11, G01N 21/64

(54) **METHOD FOR ANALYZING SPECIMEN, AND SPECIMEN ANALYZING DEVICE**

(30) Priority: 13.07.2021 JP 2021115910; 10.06.2022 JP 2022094140
(71) Applicant: CANON KABUSHIKI KAISHA, Tokyo 146-8501 (JP); Canon Medical Systems Corporation, Tochigi 324-0036 (JP)
(72) Inventor: FURUKAWA, Yukio, Tokyo 146-8501 (JP); KII, Hiroshi, Tokyo 146-8501 (JP); UTSUNOMIYA, Norihiko, Tokyo 146-8501 (JP); OZAKI, Masahiro, Otawara-shi, Tochigi 324-0036 (JP); SATAKE, Hiroto, Otawara-shi, Tochigi 324-0036 (JP)
(74) Representative: WESER & Kollegen Patentanwälte PartmbB
(86) International application number: PCT/JP2022/027198
(87) International publication number: WO 2023/286723

(57) **Abstract**

Analysis using an array plate typically requires a drying step. However, the drying step interrupts a series of operations. Further, non-uniform drying of the array plate has been a factor of reducing repeatability. The present invention proposes a method of acquiring optical information of a plurality of spots under a state in which the plurality of spots are in contact with an observation liquid.

## Description

### [Technical Field]

The present invention relates to a specimen analysis apparatus for analyzing a specimen, and to a specimen analysis method.

### [Background Art]

There is known an array plate, such as a protein array, a peptide array, and a DNA array, in which a large number of substances, such as proteins, peptides, or nucleic acids, are immobilized in spots on a substrate. Through use of the array plate, interactions between the large number of immobilized substances and substances contained in a specimen are observed at once. Accordingly, interactions with a large number of substances including specimens derived from a living body, such as blood, a cell extract, saliva, and interstitial fluid, are comprehensively analyzed.

As a measurement method using the array plate, there is known a method of selectively fluorescent-labeling a spot in which an interaction of interest has occurred and acquiring optical information of this spot. In Patent Literature 1 and Patent Literature 2, the array plate is observed through use of a microarray scanner. The device of Patent Literature 1 includes an irradiation optical system, a fluorescence detection optical system, and a two-dimensional scanning system. The irradiation optical system has a function of applying collected laser light to the array plate. The fluorescence detection optical system has a function of detecting an amount of fluorescent light emitted from the fluorescent-labeled spot. The two-dimensional scanning system has a function of two-dimensionally scanning the array plate or the optical system to acquire a fluorescence image of the spots on the array plate.

Patent Literature 2 proposes an antibody array using proximity mediation, for detecting oncogenic fusion proteins.

### [Citation List]

### [Patent Literature]

PTL 1: U.S. Patent Application Publication No. 2009/0218513
PTL 2: Japanese Patent Application Laid-Open No. 2013-508728

### [Summary of Invention]

### [Technical Problem]

However, Patent Literature 1 and Patent Literature 2 have a problem in that the array plate is required to be observed in a dried state.

A series of operations including bringing the array plate and the specimen into contact with each other and selectively fluorescent-labeling the spot in which a reaction of interest has occurred are generally performed in a liquid. Thus, the drying step has been a step that interrupts the series of operations. The drying step in the related art has used, instead of using a method including a heating step that uses phase transition between a liquid phase and a gas phase, for the purpose of reducing denaturation of the biological substance and specimen, a method of physically removing the liquid in contact with the plate from the top of the plate, such as centrifugation or air blowing. In the specification of the subject application, the drying step is hereinafter used as a concept including a step of removing a liquid from the top of the substrate through use of an external force including an inertia force, which does not always require a heating step. The drying step often aims to remove, from the top of the plate, among dissolved components in a reagent, such as a target, an enzyme, and an antibody, residual components non-immobilized on the spot, that is, components not required in the next step and thereafter. Accordingly, the drying step does not intend to selectively volatilize a solvent so as to leave the dissolved components on the top of the substrate as a residue.

### [Solution to Problem]

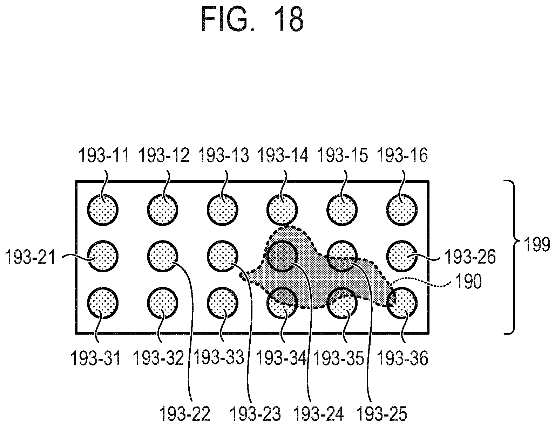

Meanwhile, the inventors of the subject application have visually recognized that, when the drying step is performed with respect to the array plate in contact with the reagent, as illustrated in FIG. 18, a mark of a part of liquid of the reagent remains even after the drying to cause "drying unevenness." The liquid mark is presumed to be made due to local and long presence of a reagent containing the dissolved components in a concentration higher than those in other regions outside of the liquid mark, and it is presumed that the liquid mark has a larger amount of residue than those in other regions.

That is, originally, there is a demand that, from a reaction step to an analysis step of performing the analysis, the plurality of spots on the array plate receive a uniform history, but the drying step has been one factor of regulating uniformity and repeatability of this history. FIG. 18 shows an array plate 199 after drying, spots 193-11 to 193-36 on the array plate, and a liquid mark 190. The liquid mark 190 means that a reaction liquid has been dried later as compared to the surrounding regions in which no liquid mark 190 is recognized, and there has been a fear in that, as compared to the regions outside of the liquid mark 190, a specimen 143, a phosphorylation reaction liquid, or a part of the dissolved components contained in the reagent locally remains as a residue. Such a liquid mark 190 is a mark that can be visually recognized. The detection dynamic range at the time of optically detecting information from the label is from about two digits to about five digits, and hence there has been a fear in that a specimen introduction step causing drying unevenness becomes a cause of a background noise in the analysis step.

In view of the above, the present invention has an object to provide an analysis method and an analysis apparatus with which, in analysis of a specimen using an array plate, influence of a residue caused by drying unevenness is reduced.

### [Advantageous Effects of Invention]

According to the present invention, the analysis method and the analysis apparatus with which, in the analysis of the specimen using the array plate, the influence of the residue caused by the drying unevenness is reduced can be provided.

### [Brief Description of Drawings]

[FIGS. 1]

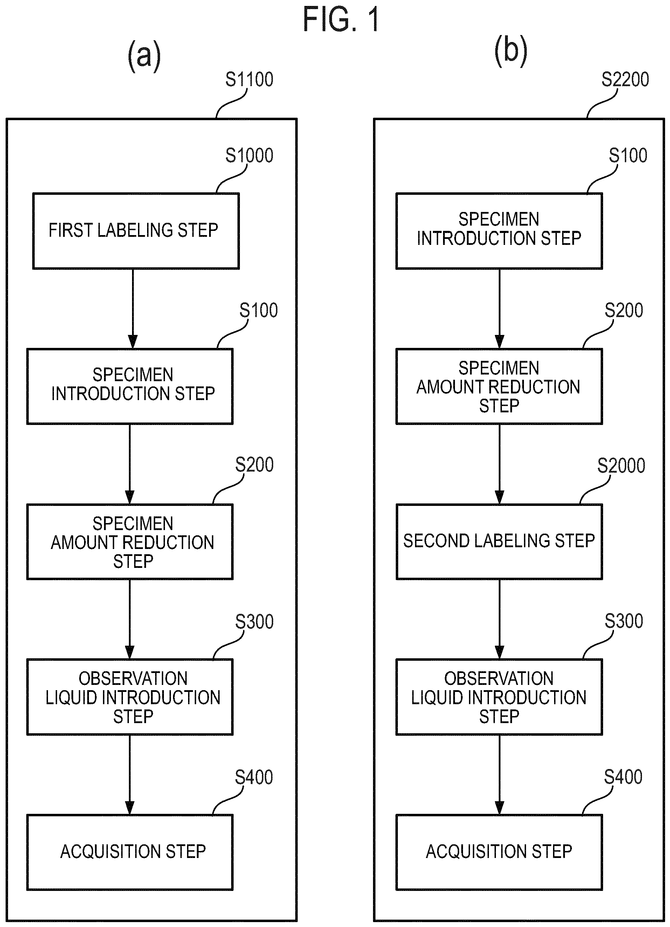

   FIG. 1(a) is a diagram for illustrating a first embodiment, and FIG. 1(b) is a diagram for illustrating a second embodiment.
[FIGS. 2]

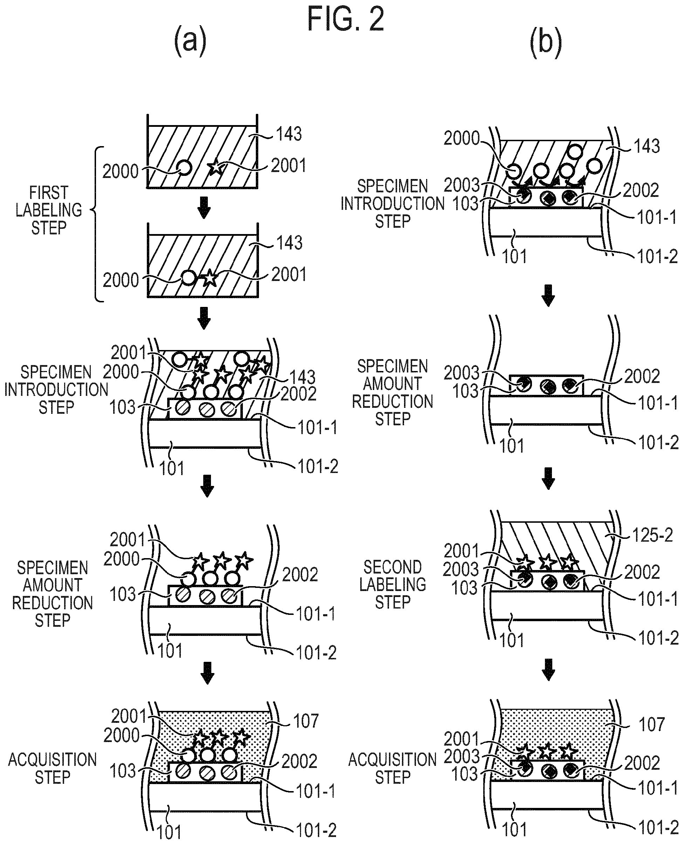

   FIGS. 2 are views for illustrating a first labeling step and a second labeling step.
[FIGS. 3]

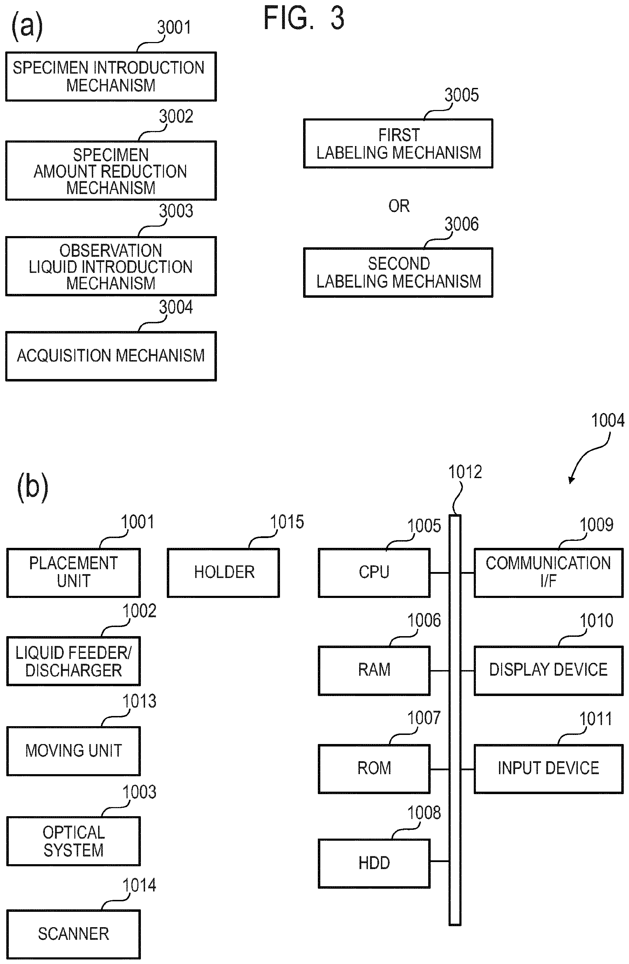

   FIGS. 3 are diagrams for illustrating an apparatus according to an embodiment.
[FIGS. 4]

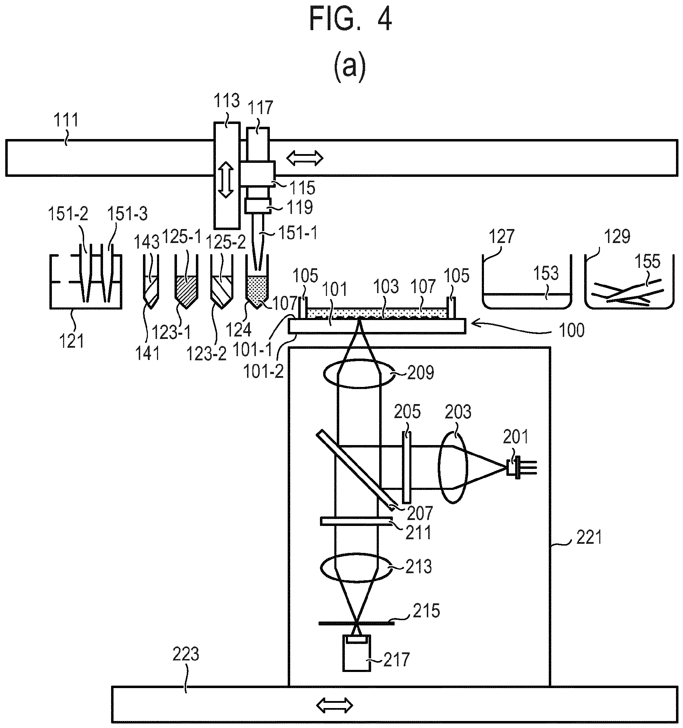

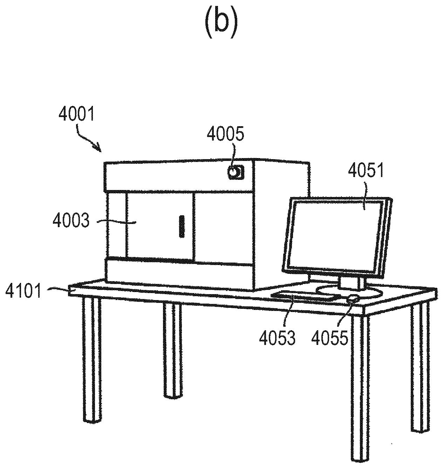

   FIG. 4(a) is a view for illustrating a schematic configuration of a specimen analysis apparatus according to an embodiment, and FIG. 4(b) is a view for illustrating an arrangement on a desk of the specimen analysis apparatus according to the embodiment.
[FIGS. 5]

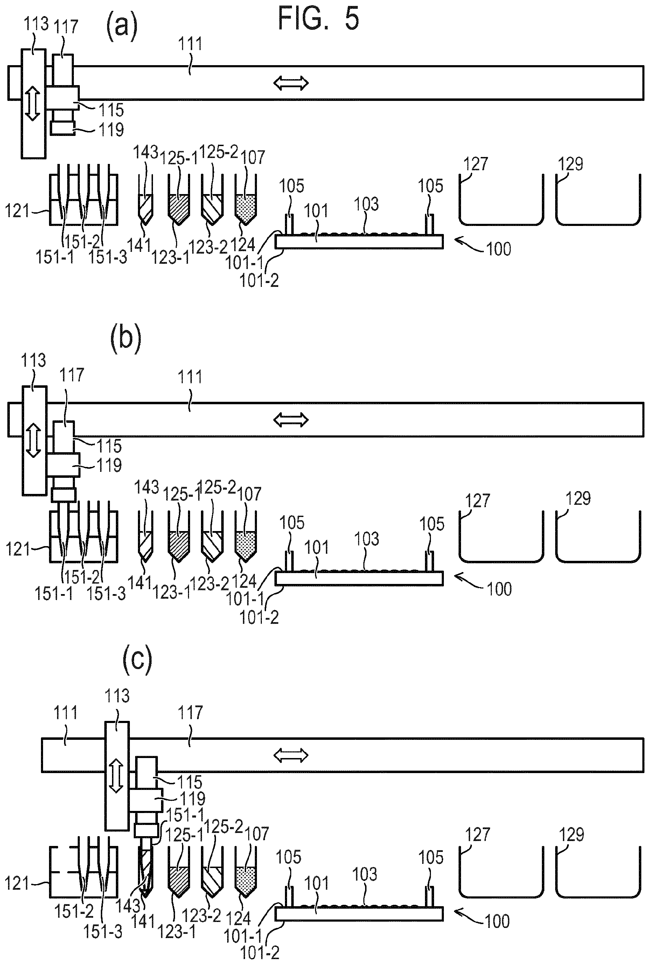

   FIGS. 5 are views for illustrating a process of Example 1.
[FIGS. 6]

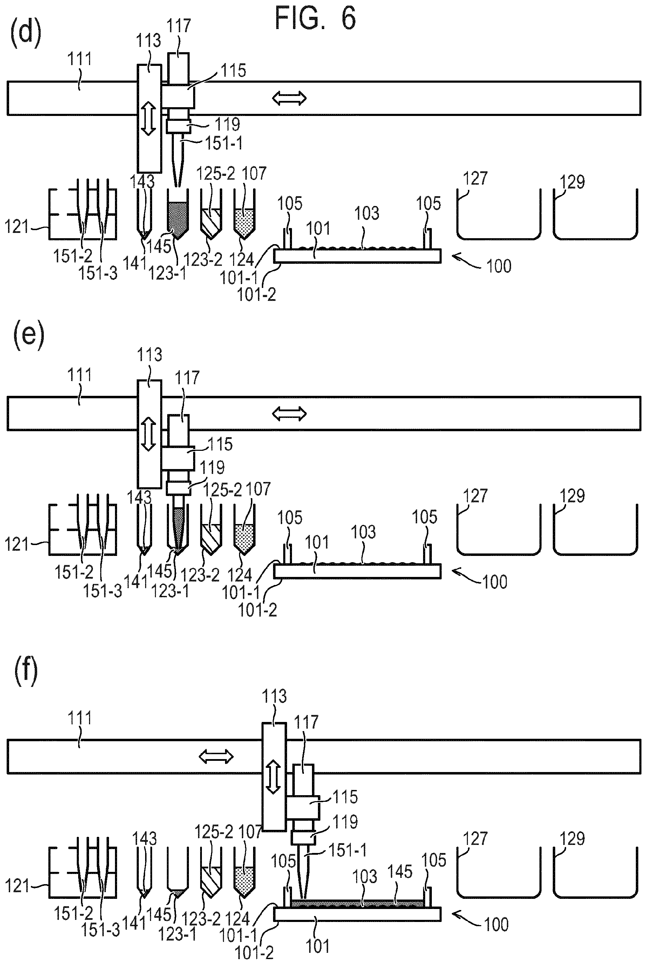

   FIGS. 6 are views for illustrating the process of Example 1.
[FIGS. 7]

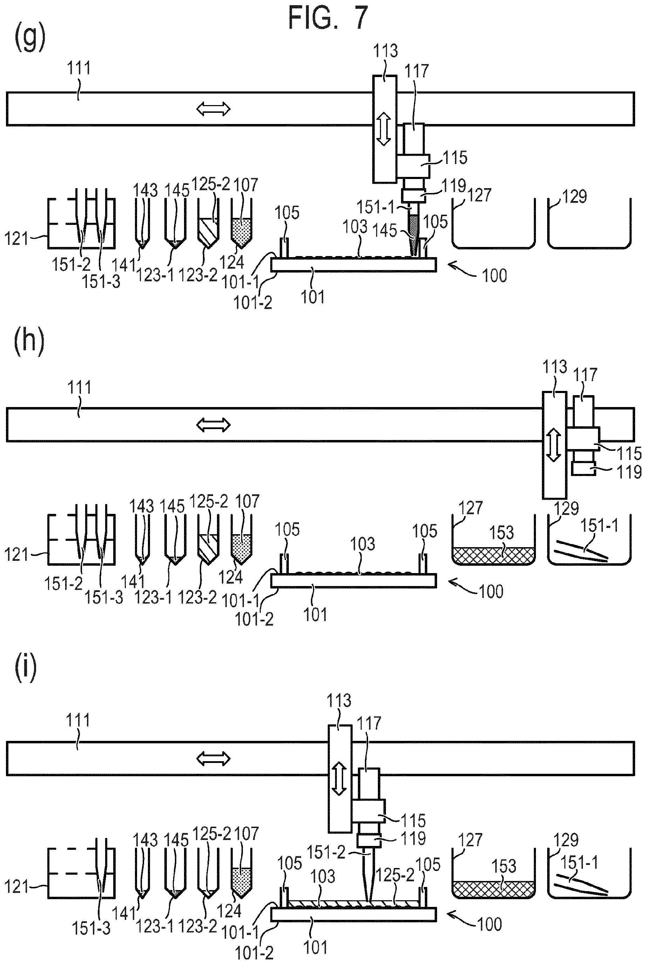

   FIGS. 7 are views for illustrating the process of Example 1.
[FIG. 8]

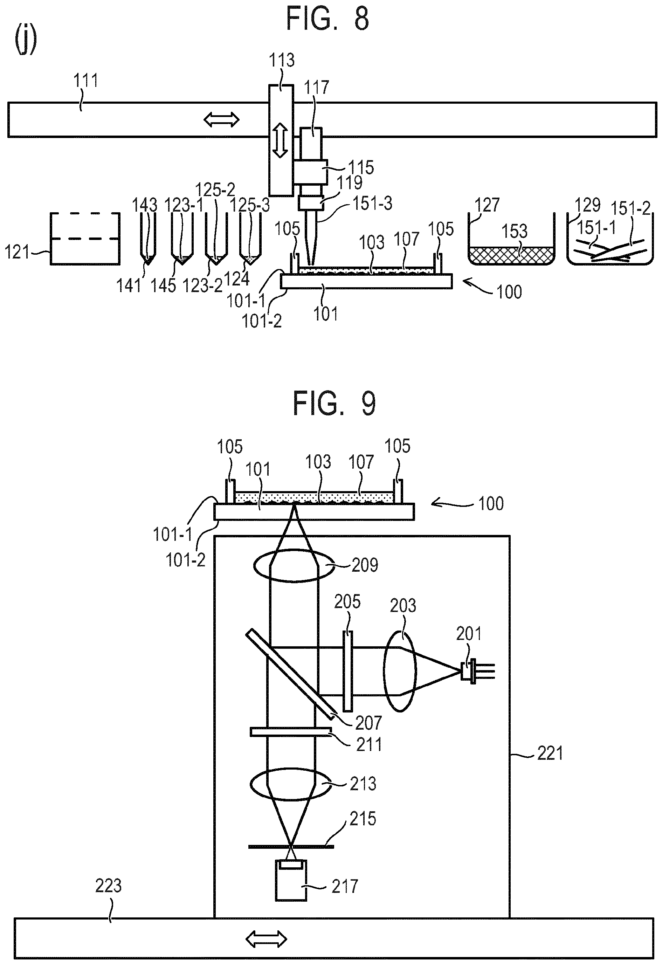

   FIG. 8 is a view for illustrating the process of Example 1.
[FIG. 9]
   FIG. 9 is a view for illustrating a fluorescence detection step of Example 1.
[FIGS. 10]

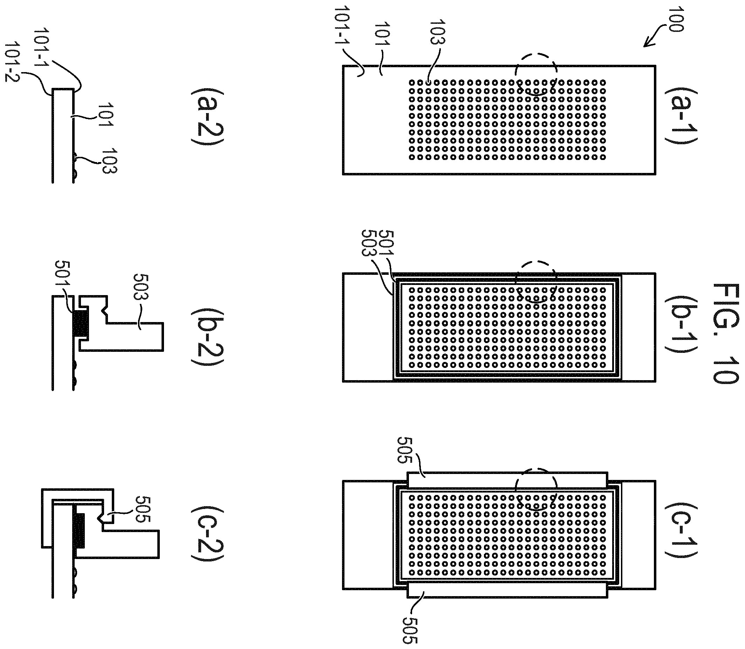

   FIGS. 10 are views for illustrating the structure of a frame.
[FIGS. 11]

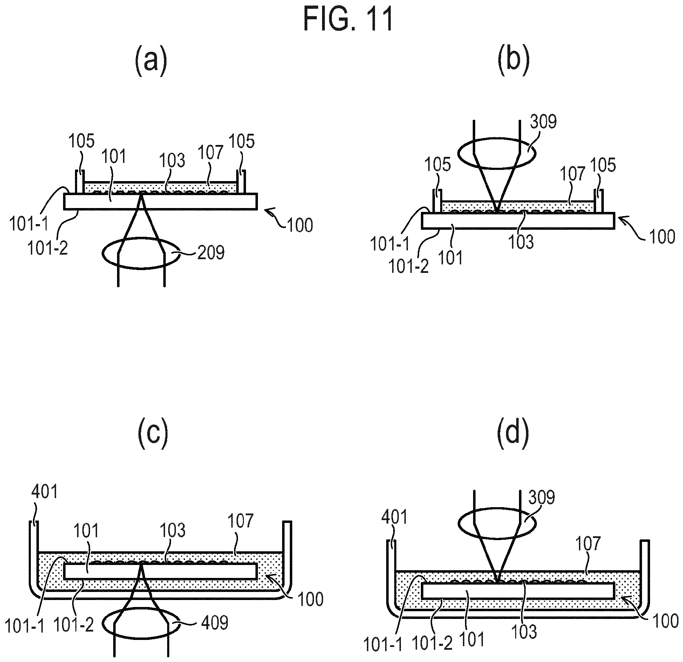

   FIGS. 11 are views for illustrating an optical information acquisition method.
[FIGS. 12]

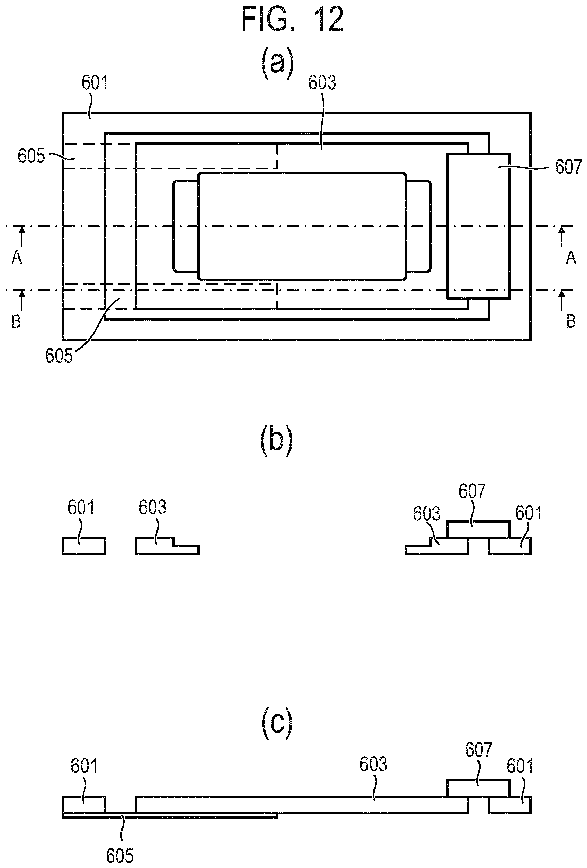

   FIGS. 12 are views for illustrating an array plate support base.
[FIGS. 13]

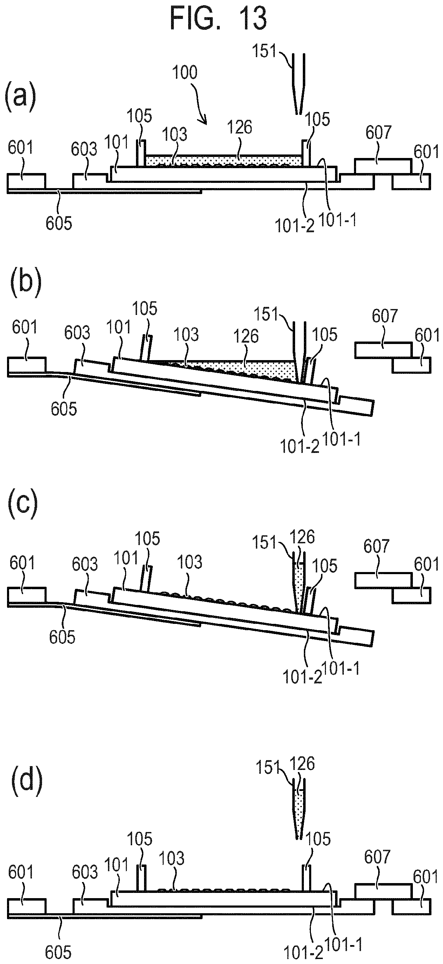

   FIGS. 13 are views for illustrating a reagent liquid discharge method using an array plate tilting mechanism.
[FIGS. 14]

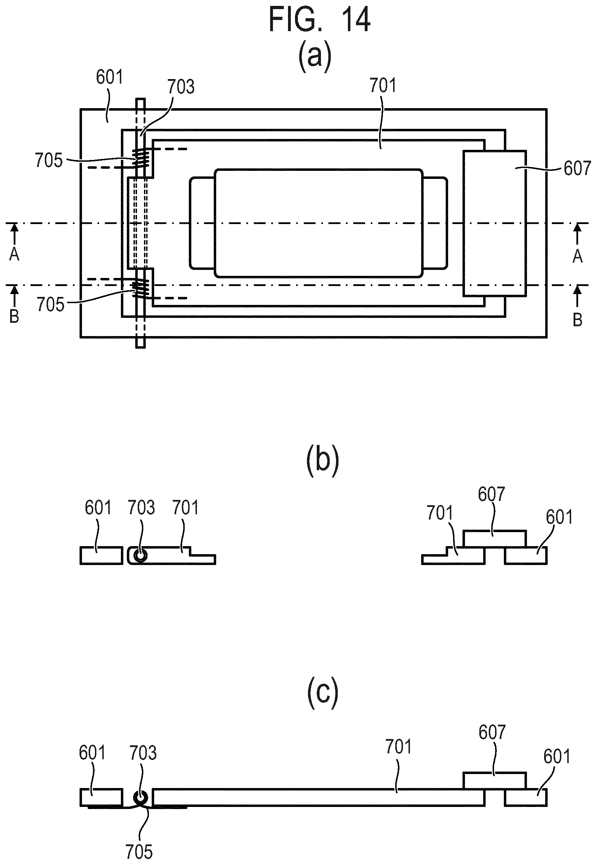

   FIGS. 14 are views for illustrating a second array plate tilting mechanism.
[FIGS. 15]

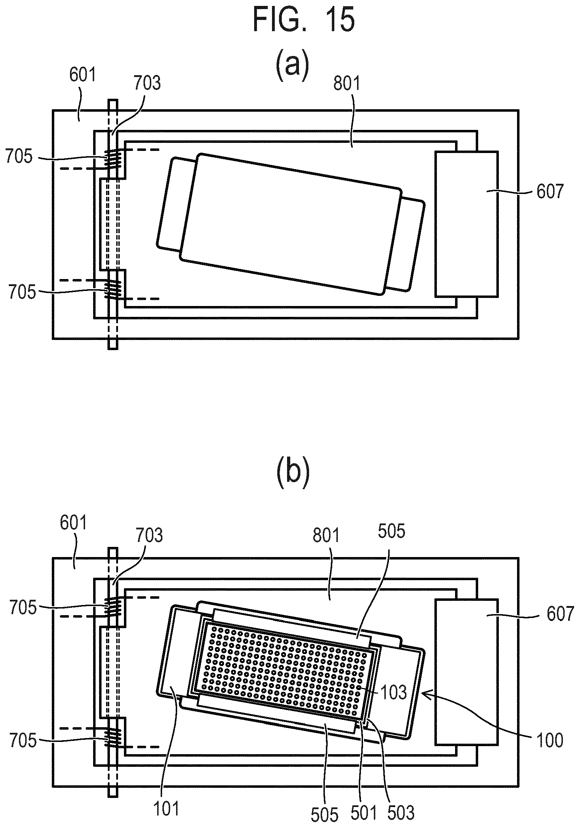

   FIGS. 15 are views for illustrating a third array plate tilting mechanism.
[FIG. 16]

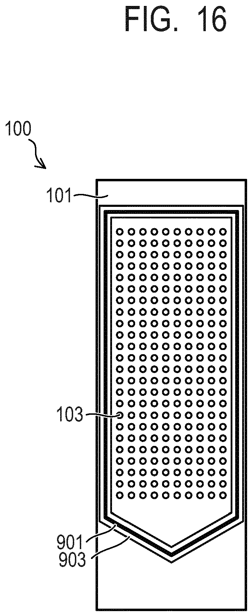

   FIG. 16 is a view for illustrating the structure of a second frame.
[FIG. 17]

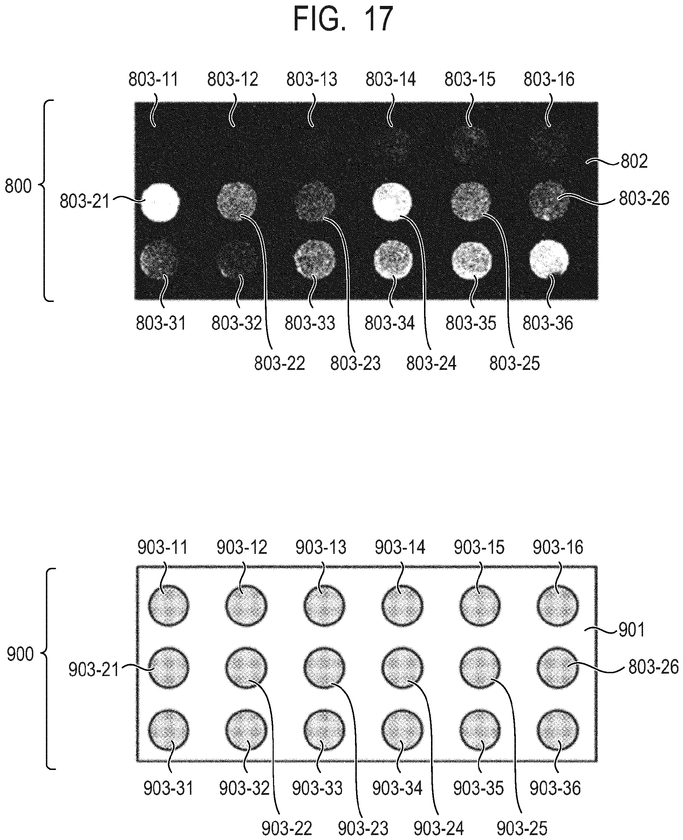

   FIG. 17 shows analysis results.
[FIG. 18]
   FIG. 18 is a view for illustrating a liquid mark of the array plate.

### [Description of Embodiments]

According to an embodiment of the present invention, there is provided an analysis method of analyzing a specimen containing a target, through use of an array plate including, on one surface thereof, a plurality of spots each containing a biological substance, the analysis method including: a specimen introduction step of bringing the specimen and the plurality of spots into contact with each other to cause a part of the plurality of spots and the target to react with each other; a specimen amount reduction step of reducing an amount of the specimen in contact with the plurality of spots; an observation liquid introduction step of bringing the one surface into contact with an observation liquid so that the plurality of spots are brought into contact with the observation liquid; and an acquisition step of acquiring optical information of the plurality of spots under a state in which the plurality of spots are in contact with the observation liquid. The analysis method further includes at least any one of a first labeling step of labeling the target before the specimen introduction step and a second labeling step of labeling the part of the plurality of spots reacted with the target, the second labeling step being performed after the specimen amount reduction step.

Further, according to another embodiment of the present invention, there is provided an analysis apparatus including: a placement unit on which an array plate is to be placed, the array plate including, on one surface thereof, a plurality of spots each containing a biological substance; a holder configured to hold a liquid so that the one surface and the liquid are brought into contact with each other; a liquid feeder/discharger configured to introduce the liquid to a region of the holder in which the liquid is held, or discharge the liquid held by the holder; a moving unit configured to move the liquid feeder/discharger with respect to the placement unit; an optical system configured to apply light to the plurality of spots to detect light emitted from the plurality of spots; a scanner configured to move the optical system with respect to the placement unit; and a controller configured to control a time to execute each of a specimen introduction step of bringing a specimen and the plurality of spots into contact with each other to cause a part of the plurality of spots and a target contained in the specimen to react with each other, a specimen amount reduction step of reducing an amount of the specimen in contact with the plurality of spots, an observation liquid introduction step of bringing the one surface into contact with an observation liquid so that the plurality of spots are brought into contact with the observation liquid, and an acquisition step of acquiring optical information of the plurality of spots under a state in which the plurality of spots are in contact with the observation liquid, the controller further being configured to control a time to execute at least any one of a first labeling step of labeling the target and a second labeling step of labeling the part of the plurality of spots reacted with the target, the first labeling step being performed before the specimen introduction step, the second labeling step being performed after the specimen amount reduction step.

Still further, according to another embodiment of the present invention, there is provided an analysis apparatus including: a placement unit on which an array plate is to be placed, the array plate including, on one surface thereof, a plurality of spots each containing a biological substance; a holder configured to hold a liquid so that the one surface and the liquid are brought into contact with each other; a liquid feeder/discharger configured to introduce the liquid to a region of the holder in which the liquid is held, or discharge the liquid held by the holder; a moving unit configured to move the liquid feeder/discharger with respect to the placement unit; an optical system configured to apply light to the plurality of spots to detect light emitted from the plurality of spots; a scanner configured to move the optical system with respect to the placement unit; and a controller configured to control the placement unit, the liquid feeder/discharger, the moving unit, the optical system, and the scanner so as to allow execution of steps of an analysis method, the analysis method including a specimen introduction step of bringing a specimen and the plurality of spots into contact with each other to cause a part of the plurality of spots and a target contained in the specimen to react with each other, a specimen amount reduction step of reducing an amount of the specimen in contact with the plurality of spots, an observation liquid introduction step of bringing the one surface into contact with an observation liquid so that the plurality of spots are brought into contact with the observation liquid, and an acquisition step of acquiring optical information of the plurality of spots under a state in which the plurality of spots are in contact with the observation liquid, the analysis method further including at least any one of a first labeling step of labeling the target before the specimen introduction step and a second labeling step of labeling the part of the plurality of spots reacted with the target, the second labeling step being performed after the specimen amount reduction step.

The present invention provides, as one embodiment, an analysis method of analyzing a specimen containing a target, through use of an array plate including, on one surface thereof, a plurality of spots each containing a biological substance, the analysis method including: a specimen introduction step of bringing the specimen and the plurality of spots into contact with each other to cause a part of the plurality of spots and the target to react with each other; a specimen amount reduction step of reducing an amount of the specimen in contact with the plurality of spots; an observation liquid introduction step of bringing the one surface into contact with an observation liquid so that the plurality of spots are brought into contact with the observation liquid; and an acquisition step of acquiring optical information of the plurality of spots under a state in which the plurality of spots are in contact with the observation liquid, the analysis method further including at least any one of a first labeling step of labeling the target before the specimen introduction step and a second labeling step of labeling the part of the plurality of spots reacted with the target, the second labeling step being performed after the specimen amount reduction step.

### <Array Plate>

An array plate includes, on a substrate, spots containing a large number of types of biological substances, and is used for comprehensive analysis of samples. In some cases, the array plate is also called a microchip, a microarray, a protein chip, a DNA chip, and the like. A position of each spot in the array plate is referred to as "address in the array plate." Each spot can be marked with a symbol as the address. The address may be determined by a physical position of each spot on the array plate. In this case, the address can be determined by a distance from each end of the array plate, or coordinates.

In the specification of the subject application, the array plate includes at least sixteen spots each containing a biological substance, and also includes at least two spots that are different from each other in at least any one of a composition, a content, and a blending amount of the biological substance. In the specification of the subject application, the array plate has a flat plate shape, and includes the spots each containing the biological substance on one surface thereof. In some cases, a surface on which the spots are provided is also referred to as "first surface (101-1)," and a back surface of the first surface is also referred to as "another surface (101-2)" or "second surface (101-2)."

The array plate in the present invention is a flat plate having each of a length and a width of from 10 mm to 128 mm and a thickness of from 0.1 mm to 2.5 mm. As the shape of the plate, a hexahedron including a cuboid and a truncated quadrangular pyramid or a disc form including a cylinder, an elliptical cylinder, and a truncated cone is adopted. It is preferred that a peripheral edge for defining a periphery of the surface of the plate be rounded or tapered. The plurality of spots are arranged on one of two surfaces opposed to each other so as to define the thickness of the plate. A diameter of the spot is adjusted depending on the size of the plate, an image pickup field of view, and the number of spots, but a diameter of from 0.1 µm to 5,000 µm is adopted. As the spot, a square, a rectangle, a circle, or an ellipse, which is arranged to be separated away from an adjacent spot, is adopted. As an array period between the spots, a period of from about 1.1 times to about 10 times of the spot diameter is adopted. One array plate includes at least sixteen or more spots, more preferably sixty-four or more spots, further preferably one-thousand or more spots.

A commercially-available array plate may be used. Microarray plates are sold by Agilent Technologies Ltd., RayBiotech Inc., and the like. As another example, an array plate is produced with reference to a publicly-known method. The array plate is produced by immobilizing a desired biological substance on one surface of a suitable substrate. Immobilization is also referred to as "adsorption", and examples thereof include immobilization caused by a hydrophobic interaction, an electrostatic interaction, a van der Waals interaction, hydrogen bonding, and covalent bonding. As the substrate, a substrate having transmittance with respect to a wavelength of excitation light is adopted. Further, a substrate having transmittance with respect to a wavelength of fluorescent light depending on the optical arrangement is adopted. The phrase "having transmittance" means a property of transmitting light having at least one of the wavelengths. The phrase "having transmittance" includes a case in which part of light having a specific wavelength is transmitted. Further, in some cases, as the substrate, a substrate that has transmittance and causes less scattering at the wavelengths of the excitation light and the fluorescent light described above is adopted. As a material for the substrate, there are given, for example, glass, synthetic quartz, quartz, and borosilicate glass. Examples of the material also include resins, such as polystyrene, polypropylene, a (meth)acrylic resin, polyamide, polyimide, melamine, ABS, polyphenylene oxide urethane, silicone, epoxy, and polydimethylsiloxane. In addition, films, such as nitrocellulose and polyvinylidene fluoride, and gels, such as agarose and acrylamide, may be adopted as the material. Those materials may each be used as an array plate by being fixed or supported by, for example, a frame-like frame or another substrate as required.

Immobilization of the biological substance can be performed by publicly-known methods, such as a method using an arrayer, a method to be performed by stamping, a method to be performed through use of a semiconductor technology, and a method by pipetting. Further, in order to prevent a substance contained in the specimen from directly binding to the substrate, the array plate may be processed with a non-specific adsorption inhibitor containing a blocking agent.

### <Biological Substance>

The biological substance as used herein refers to a substance immobilized on the array plate and contained in a spot. The biological substance can be determined by a person who implements the present invention as appropriate depending on the purpose, and any kind of substance may be the biological substance. The biological substance includes, for example, a protein, a peptide, a nucleic acid, a low-molecular-weight compound, a virus, and cells, and any of those materials may be naturally derived or obtained by synthesis or genetic recombination. Further, specific examples of the biological substance include various substances, such as an antibody, an antigen, a phosphorylated protein, a dephosphorylated protein, a low-molecular-weight compound, a receptor, an enzyme, a substrate, a phosphorylated enzyme substrate, an allergen, a cytokine, a hormone, a bacterium, a virus, a microbe, a DNA, an RNA, a cDNA, cells, cells film constituent components, a cancer marker, a disease marker, a biological-derived substance, an extract from a living body or the like, a blood, a blood-derived substance, a food, a food-derived substance, a natural product, a natural product-derived substance, and a culture-derived substance.

### <Specimen>

The specimen can be determined by a person who implements the present invention as appropriate depending on the purpose, and any kind of specimen may be the specimen. The specimen encompasses a biological-derived substance, an extract from a living body or the like, a blood, a blood-derived substance, a food, a food-derived substance, a natural product, a natural product-derived substance, and a culture-derived substance. A substance which is contained in the specimen and is expected to react with the biological substance is called a target. Examples of the target include an antibody, an antigen, a phosphorylated protein, a dephosphorylated protein, a nucleic acid, a low-molecular-weight compound, a receptor, an enzyme, a substrate, an allergen, a cytokine, a hormone, a bacterium, a virus, a microbe, a DNA, an RNA, a cDNA, cells, cells film constituent component, a cancer marker, and a disease marker. According to the method of this embodiment, information on an interaction between a target contained in the specimen and the biological substance can be obtained, and information on the specimen can be obtained.

The specimen can be pretreated as appropriate depending on the purpose and procedure. Treatment such as reduction treatment or heat treatment may be performed. Further, a reagent may be added in advance to the specimen. A labeling substance may be bound in advance to the target contained in the specimen.

The form of the specimen may be a solid, a liquid, or a gas, but the specimen is used in a liquid form through dilution, suspension, or extraction using water, physiological saline, a buffer solution, or other solutions as appropriate. The specimen may contain a surfactant, an antiseptic agent, a non-specific adsorption inhibitor, or other additives. Further, a reagent is added to the specimen depending on the purpose.

### <Labeling Substance>

In order to visualize the spot that has reacted with the target, the target or the spot that has reacted with the target is labeled, that is, the target is bound with a labeling substance, or a labeling substance is introduced to the spot that has reacted with the target. As the labeling substance, a labeling substance that can be optically detected is used. Examples of the labeling substance include a fluorescent substance, a chemiluminescent substance, a phosphorescent substance, a dye, gold nanoparticles, fluorescent particles, an enzyme for causing enzymatic chemiluminescence or a color reaction, and microparticles exhibiting absorption at a specific wavelength. Further, the labeling substance may contain antibodies, ligands, or other binding sites. The binding or introduction of the labeling substance is performed by binding the labeling substance through binding by means of a hydrophobic interaction, an electrostatic interaction, a van der Waals interaction, hydrogen bonding, or covalent bonding, or by performing introduction at the time of PCR or synthesis. In addition, as a labeling method, a publicly-known method is used.

Typically, the labeling substance is a fluorescent substance. A first labeling step or a second labeling step to be described later typically uses a fluorescent substance for labeling. The fluorescent substance is advantageous in that light emission can be stably obtained, no substrate is required, and region-specific labeling is allowed, thereby being suitable for two-dimensional analysis, or in that multiple labeling is allowed through use of fluorescent substances having different wavelengths. The kind of the fluorescent substance is appropriately selected in accordance with a reaction system or an optical system. The fluorescent substance encompasses, for example, fluorescein, cyanine, rhodamine, Texas Red, a coumarin-based dye, a fluorescent protein, and a quantum dot. A person skilled in the art may select a fluorescent substance having an appropriate excitation wavelength, fluorescent wavelength, and properties in accordance with the optical system or an experimental system.

The chemiluminescent substance is advantageous in that light emission is obtained through addition of a substrate and no excitation light source is required, and in that the sensitivity is high. When the chemiluminescent substance is used, as the labeling substance, an enzyme for catalyzing chemiluminescence or a substrate is used. Examples of the substrate include enzymes such as alkaline phosphatase and horseradish peroxidase, and a substrate containing acridinium. Chemiluminescence can generally be observed through use of a highly sensitive CCD camera. Meanwhile, it is required to supply a substrate or a catalyst for light emission at the time of detection. It is preferred that those substances be added to an observation liquid.

Gold nanoparticles have a property of absorbing light having a wavelength close to a specific wavelength, depending on their particle diameters. When the labeling substance is gold nanoparticles, the labeled spots can be detected by measuring reflected light amount or light absorption at a selective wavelength. Gold has a high affinity for sulfur, nitrogen, and oxygen atoms, and an object to be labeled is thiolated (an -SH group is added) to be bound to the surfaces of the gold nanoparticles by a sulfur-gold atom bond.

### <Observation Liquid>

The observation liquid is also referred as "purge liquid," with the meaning that the observation liquid replaces, that is, purges out an optical background noise component. The observation liquid is arranged so as to be in contact with at least the spots of the array plate when the optical information is acquired. The observation liquid may be arranged so as to be in contact with a part of the first surface or the entire first surface of the array plate. It is preferred that the observation liquid have a good affinity for a liquid used on the array plate in the process immediately before. It is desired that the observation liquid have a refractive index close to that of the substrate of the array plate so that oxidation of a substance on the array plate, particularly, the labeling substance is prevented. Further, it is desired that the observation liquid do not emit fluorescent light when being applied with excitation light for acquiring the optical information. A glycerol solution is suitably used as the observation liquid satisfying those conditions, but the observation liquid can be selected as appropriate based on the properties of the labeling substance, the biological substance, and the specimen.

Further, the observation liquid may be used as a cleaning liquid. As another example, a cleaning liquid present on the array plate, a reagent to be used in the second labeling step, or any other liquid used in the process may be used as the observation liquid.

The observation liquid has a refractive index closer to that of the substrate of the array plate as compared to that of air. The observation liquid is preferably a liquid having a refractive index of 1.3 or more, more preferably a liquid having a refractive index of from 1.33 to 1.60, still more preferably 1.40 or more and 1.46 or less from the viewpoint that the refractive index is closer to a refractive index of an array plate. Examples thereof may be preferably water, physiological saline, a phosphate buffer, a tris-hydrochloric acid buffer, any other buffer, and any other solution each containing 40 vol% or more and 90 vol% or less of glycerol. Glycerol has a hygroscopic property and a high viscosity, and the observation liquid is difficult to use when glycerol exceeds 90 vol%. When glycerol is less than 40 vol%, the refractive index of the observation liquid is separated from the refractive index of the array plate. Further, the observation liquid may contain a surfactant, an antiseptic agent, and a non-specific adsorption inhibitor as appropriate. As the observation liquid, typically, a buffer solution containing glycerol of 80 vol% can be given.

The observation liquid may further contain a commercially-available antifading agent for preventing a dye from fading. Examples of the antifading agent include Prolong produced by Thermo Fisher Scientific Inc.

### <Analysis Method>

In the analysis method of this embodiment, a part or all of the operations may be manually performed by a person, but it is preferred that all of the steps be automatically performed by an apparatus. The method of this embodiment does not include a drying step. Accordingly, there is no need to convey the array plate to a dryer, which provides further advantage in automatically performing all of the steps by the apparatus. Conceptual diagrams of the steps in this embodiment are illustrated in FIG. 1(a) and FIG. 1(b). FIG. 1(a) shows an analysis method S 1100 according to a first embodiment using the first labeling step, and FIG. 1(b) shows an analysis method S2200 according to a second embodiment using the second labeling step. The analysis methods are more specifically described as follows. However, the present invention is not limited to the following description.

### <<First Embodiment>>

FIG. 1(a) shows a process diagram of the analysis method S1100 according to the first embodiment. The analysis method S1100 includes a first labeling step S1100 of labeling a target, which is performed before a specimen introduction step S100 (described later) of bringing a specimen and a plurality of spots into contact with each other to cause a part of the plurality of spots and the target to react with each other.

### Specimen Introduction Step (S100)

In this step, the specimen and the spots are brought into contact with each other so that a part or all of the targets are reacted with the biological substance contained in the spot. Examples of the reaction include binding between the target and the biological substance, a chemical reaction, and an enzymatic reaction.

A reagent may be added to the specimen depending on the purpose. The specimen is added in an amount that covers at least the spots. A part of the first surface or the entire first surface of the array plate may be covered with the specimen. The substance contained in the specimen and the biological substance are reacted with each other at a temperature suitable for the reaction for a desired time period.

As a holding mechanism, a frame can be provided on the array plate, or the array plate can be placed in a suitable container. With the frame or the container, the specimen and a liquid to be used in each of the following steps, such as an observation liquid, a replacement liquid, or a reagent, can be held on the array plate.

### Specimen Amount Reduction Step (S200)

In this step, an amount of the specimen introduced in the specimen introduction step S100 is reduced. Through this step, a target bound to the biological substance in the specimen introduction step S100 remains on the spot side, and a target not reacting with the biological substance or a target obtained after the biological substance undergoes a chemical reaction or an enzymatic reaction is reduced.

The specimen on the spots is reduced by being sucked by a nozzle. Examples of the nozzle include a pipette tip, a needle, a pipette, a syringe, a pump, and a combination thereof. The specimen may be reduced by tilting the array plate or the container containing the array plate with respect to a horizontal plane. As another example, without using a nozzle, the array plate may be simply tilted so that the specimen is reduced through decantation, and then the liquid may be further sucked by a nozzle so as to be reduced. The term "reduction" here means that the volume of the liquid becomes less than 10% of the volume of the liquid before the reduction. Not only the reduction of the specimen but also the reduction of other liquids is performed similarly to the case described above.

### Observation Liquid Introduction Step (S300)

In this step, an observation liquid is brought into contact with the spot. Through this step, no drying step is required, and hence a process from the specimen introduction step S100 to an acquisition step S400 can be performed without interruption and without leaving a mark of drying.

The observation liquid is added so as to cover at least the spot. It suffices that a top of a target spot be in contact with the observation liquid, but a part of the first surface or the entire first surface of the array plate may be covered with the observation liquid. It is preferred that the observation liquid be in contact with only the first surface side of the array plate, and the observation liquid not be in contact with the second surface.

Further, the cleaning liquid and other reagent liquids may be used as they are as the observation liquid, and, in this case, a step of bringing those liquids into contact with the spot corresponds to this step.

Further, the observation liquid introduction step S300 can also serve as a part of the specimen amount reduction step S200. That is, when a procedure of reducing a part of the specimen on the spot, introducing the observation liquid, and reducing again a part of a mixture liquid of those liquids is repeated a plurality of times, the amount of the specimen can be reduced to less than 10% of the introduced amount or to a desired level. With this method, all of the steps can be performed under a state in which some kind of liquid is constantly maintained on the spot.

Further, the specimen in contact with the spot can be replaced with the observation liquid, that is, the introduced specimen can be replaced with the observation liquid without ever being replaced with another liquid.

### Acquisition Step (S400)

In this step, the optical information of the spot is acquired. With the optical information, information on presence or absence of the labeling substance is obtained, that is, whether or not the spot has reacted with the target can be determined.

The optical information of the plurality of spots is obtained under a state in which the spots are in contact with the observation liquid. The information is acquired by an optical system. The optical information includes at least any one of light intensity information and spectral information from the spot. The optical system is present on the second surface side of the array plate. When the labeling substance is a fluorescent substance, the optical system applies excitation light to the spot from the second surface side, and detects fluorescent light emitted from the spot from the second surface side. The light intensity information and the spectral information can be acquired in association with the addresses of the spots in the array plate. Information on the specimen can be further acquired based on the obtained optical information. This step can be referred to as "specimen information acquisition step."

The observation liquid has a refractive index closer to that of the array plate as compared to that of air, and hence the light emitted from the optical system is less liable to be reflected at the interface between the array plate and the observation liquid. Thus, optical information having a higher signal-to-noise ratio can be obtained.

When the labeling substance is a fluorescent substance, any optical system can be used without limitation as long as the optical system can excite the fluorescent substance and detect the fluorescent light emitted from the spot. An excitation light source is used in order to excite the fluorescent substance, and, for example, a laser light source, a light-emitting diode, an LED, a mercury arc, and a tungsten halogen lamp may be used as the excitation light source. For example, a CCD camera or a photodiode may be used for detection. The optical system appropriately includes a filter for irradiation with or detection of light having a limited wavelength. In addition, the optical system may include a lens. The optical system may be a scanning type or a non-scanning type. A typical optical system is a confocal optical unit.

When, for example, a chemiluminescence, a gold colloid, or a dye is used as a labeling substance, the excitation light source is not required.

### First Labeling Step (S1000)

In the analysis method S1100 according to the first embodiment and the analysis method S2200 according to the second embodiment described later, in order to label the spot, at least any one of the first labeling step S1000 and the second labeling step S2000 is executed. The first labeling step S1000 is performed in a case in which analysis is performed by binding in advance the labeling substance to the target contained in the specimen. When the target bound with the labeling substance binds to the biological substance in the specimen introduction step S100, in the acquisition step S400, the spot having the bound target can be observed in a labeled manner, and thus it can be determined that a reaction has occurred.

Examples of the method of binding the labeling substance to the target include a chemical reaction via a functional group, a method using a PCR, a method using a kit, and any other publicly-known methods. This step is performed before the specimen introduction step S100. An outline of a case in which the first labeling step S1000 is performed is illustrated in FIG. 2(a). In the first labeling step S1000, a target 2000 is labeled with a labeling substance 2001 (uppermost and second views of FIG. 2(a)). In the specimen introduction step S100 and the specimen amount reduction step S200, the target reacts with a biological substance 2002 contained in a spot 103, and the labeling substance 2001 is introduced to the spot 103 (third and lowermost views of FIG. 2(a)). In the observation liquid introduction step S300, the spot and the observation liquid are brought into contact with each other.

### <<Second Embodiment>>

FIG. 1(b) shows a process diagram of the analysis method S2200 according to the second embodiment. The analysis method S2200 is different from the first embodiment S 1100 in including the second labeling step S2000 of labeling a target, which is performed before the specimen introduction step S200 of reducing the amount of the specimen in contact with the plurality of spots.

### Second Labeling Step (S2000)

When the first labeling step S1000 is not performed, the second labeling step S2000 is performed. Both of the first labeling step S2000 and the second labeling step S2000 may be performed. The second labeling step S2000 is performed after the specimen amount reduction step S200, and labels the spot that has reacted with the target. The labeling substance is introduced specifically to the target bound to the spot or to the change in the biological substance caused by the target. In this step, the spot reacted with the target can be observed in a labeled manner, and thus it can be determined that a reaction has occurred.

An outline of a case in which the second labeling step S2000 is performed is illustrated in FIG. 2(b). The target 2000 reacts with the spot 103 through the specimen introduction step 5100 (uppermost view of FIG. 2(b)) and the specimen amount reduction step S200 (second view from the top of FIG. 2(b)), thereby causing a change 2003 specific to the biological substance 2002 of the spot 103. In the second labeling step S2000, the labeling substance 2001 is introduced specifically to the change 2003 of the biological substance (third view from the top of FIG. 2(b)). An example of the change 2003 of the biological substance is phosphorylation. The labeling substance is introduced via an antibody, a ligand, or its secondary antibody that recognizes the change of the biological substance (lowermost view of FIG. 2(b)). Other publicly-known methods may be used in this step. In the second labeling step S2000, the labeling substance is not introduced (immobilized) to an unreacted spot that has not reacted with the target, but, in this case, the labeling substance is present in a non-immobilized state on the substrate between the unreacted spots. Thus, the labeling substance becomes a background noise in the acquisition step. The spot is labeled through any one or both of the first labeling step S 1000 and the second labeling step S2000.

In order to finish the second labeling step S2000 so as to achieve a state in which the labeling substance is introduced to a part of the plurality of spots, a cleaning step is performed to reduce, from the first surface, the non-immobilized (unintroduced) labeling substance present on the substrate between the unreacted spots. In the cleaning step, a reagent liquid 125-2 containing the labeling substance 2001 is reduced from one surface (first surface 101-1) of the substrate so that the non-immobilized labeling substance present on the substrate between the unreacted spots is reduced. In other words, the cleaning step reduces the non-immobilized labeling substance present on the substrate between the unreacted spots so that the labeling substance introduced to the spot that has reacted with the target is selectively left in a corresponding spot. In some cases, the cleaning step to be described later is also referred to as a part of the second labeling step S2000.

The residue on the first surface 101-1 of the reagent liquid 125-2 used in the second labeling step S2000 is replaced with a cleaning liquid to be used for cleaning in each cleaning step. Accordingly, the cleaning liquid is also referred to as "replacement liquid for the reagent liquid 125-2." Through replacement of the cleaning liquid a plurality of times, the residue of the reagent liquid 125-2 on the first surface 101-1 asymptotically decreases to zero. As described later, in an embodiment in which the cleaning liquid is used as the observation liquid, the observation liquid is substantially the replacement liquid that replaces the reagent liquid 125-2. Bringing a predetermined component closer to 0 through liquid replacement is also referred to as "purging out" or "to purge," and hence the observation liquid and the cleaning liquid are also referred to as "purge liquid."

### Cleaning Step

The embodiments may include a cleaning step. The cleaning step is performed by arranging the cleaning liquid on the spots and reducing a solution after the cleaning. The cleaning step may be repeatedly performed. A cleaning liquid obtained by appropriately adding a surfactant, a preservative, a non-specific adsorption inhibitor, glycerol, or any other additive to water, physiological saline, a phosphate buffer, a tris-hydrochloric acid buffer, any other buffer, or any other solution is used as the cleaning liquid. TBST serving as a tris-buffer containing a polysorbate may be typically used as the cleaning liquid. The cleaning liquid may be used as it is as an observation liquid. That is, the cleaning step may be included as a part of the observation liquid introduction step S300 described later.

### <Detection of Protein-protein Interaction>

As one embodiment, observation of a protein-protein interaction can be given. As an example thereof, a method of detecting an antibody contained in the specimen through use of an array plate on which an antigen is immobilized is described below.

When an antibody contained in the specimen is detected, an antigen is adopted as the biological substance of the array plate. Through the first labeling step S1000, the fluorescent substance is bound to the antibody contained in the specimen. Through the above-mentioned specimen introduction step S100, among the antibodies contained in the specimen, an antibody exhibiting a specific interaction with a predetermined antigen (biological substance) contained in a corresponding spot binds to the antigen of the corresponding spot and is immobilized on the predetermined spot. In some cases, the cleaning step is performed between steps among the specimen amount reduction step S200, the observation liquid introduction step S300, and the acquisition step S400.

As another example, the specimen introduction step S100 and the specimen amount reduction step S200 may be performed without performing the first labeling step S1000.

In this case, the second labeling step S2000 is performed. In the second labeling step S2000, the labeling substance is introduced to the target bound to the spot via a more specific substance. Both of the first labeling step S1000 and the second labeling step S2000 may be performed. After that, the observation liquid introduction step S300 and the acquisition step S400 are performed. The cleaning step is performed as appropriate between the steps. The cleaning liquid in the cleaning step may be used as the observation liquid.

Next, a method of detecting an antigen contained in the specimen through use of an array plate on which an antibody is immobilized is described below. In this case, after the specimen introduction step S100 and the specimen amount reduction step S200 are performed, the labeling substance is introduced in the second labeling step S2000. In the specimen introduction step S100, the antigen contained in the specimen binds to the antibody immobilized on a corresponding spot so as to be immobilized on the corresponding spot. Here, the corresponding spot refers to a spot containing, as the biological substance, an antibody that specifically interacts with the antigen contained in the specimen. In the second labeling step S2000, the labeling substance may be introduced by using an antibody that recognizes the antigen. The antibody used at this time may be the same antibody as the antibody used as the biological substance, or may be an antibody having a recognition site different from that of the antibody used as the biological substance. In the specification of the subject application, in some cases, elementary steps of each process are described while focusing on a spot in which a specific interaction with the target contained in the specimen, the antibody contained in the reagent, or a reaction promoting component is caused. In some cases, this focused spot is referred to as "corresponding spot." Further, in some cases, a spot containing a biological substance that has a specific interaction with the target contained in the specimen is referred to as "corresponding spot."

### <Detection of Nucleic Acid>

As one embodiment, detection of a nucleic acid contained in the specimen is given. When the nucleic acid contained in the specimen is detected, the biological substance of the array plate is a synthetic oligo DNA. The labeling substance is bound to the nucleic acid contained in the specimen through the first labeling step S1000. The synthetic oligo DNA has a sequence complementary to the desired DNA sequence. In the specimen introduction step S100, a hybridization reaction is performed. The specimen amount reduction step S200, the observation liquid introduction step S300, and the acquisition step S400 are performed. The cleaning step is performed as required. The cleaning liquid in the cleaning step may be used as the observation liquid.

### <Detection of Phosphorylated Enzyme>

As one embodiment, detection of a phosphorylated enzyme contained in the specimen is given. A method of detecting the phosphorylated enzyme contained in the specimen is described below.

When the phosphorylated enzyme is detected, the biological substance of the array plate is a phosphorylated enzyme substrate. The phosphorylated enzyme substrate refers to a substrate to be phosphorylated by the phosphorylated enzyme, and is a subordinate concept of protein or peptide. In the specimen introduction step S100, the substrate of the corresponding spot is phosphorylated by the phosphorylated enzyme contained in the specimen. Here, the corresponding spot refers to a spot containing, as the biological substance, a phosphorylated enzyme substrate that undergoes a specific phosphorylation reaction by the phosphorylated enzyme contained in the specimen. After the specimen amount reduction step S200, the second labeling step S2000 is performed. In the second labeling step S2000, the labeling substance is introduced to the corresponding spot via a phosphorylation site recognition substance. The phosphorylation site recognition substance refers to a substance that specifically recognizes a phosphorylated site in the substrate phosphorylated by the phosphorylated enzyme. As the phosphorylation site recognition substance, an anti-phosphorylated amino acid antibody is exemplified. When the labeling substance is not bound to the phosphorylation site recognition substance, the labeling substance is introduced via a secondary antibody or a specific reaction including a biotin-avidin reaction. After that, the observation liquid introduction step S300 and the acquisition step S400 are performed. The cleaning step is performed as required. The cleaning liquid in the cleaning step may be used as the observation liquid. The reagent liquid used in the second labeling step S2000 at least contains a primary antibody including the phosphorylation site recognition substance that recognizes the phosphorylated site, and contains a secondary antibody including the labeling substance as required.

### <Apparatus>

Further, the present invention provides, as one embodiment, an analysis apparatus for analyzing a specimen containing a target, through use of an array plate including, on one surface thereof, a plurality of spots each containing a biological substance, the analysis apparatus including: a specimen introduction mechanism configured to bring the specimen and the plurality of spots into contact with each other; a specimen amount reduction mechanism configured to reduce an amount of the specimen in contact with the plurality of spots; an observation liquid introduction mechanism configured to bring the one surface into contact with an observation liquid so that the plurality of spots are brought into contact with the observation liquid; and an acquisition mechanism configured to acquire optical information of the plurality of spots under a state in which the plurality of spots are in contact with the observation liquid, the analysis apparatus further including at least any one of a first labeling mechanism and a second labeling mechanism, the first labeling mechanism being configured to label the target and operate before the specimen introduction mechanism operates, the second labeling mechanism being configured to label the part of the plurality of spots reacted with the target and operate after the specimen amount reduction mechanism operates.

The apparatus according to this embodiment is described with reference to FIG. 3(a). The apparatus includes a specimen introduction mechanism 3001, a specimen amount reduction mechanism 3002, an observation liquid introduction mechanism 3003, and an acquisition mechanism 3004, and further includes at least any one of a first labeling mechanism 3005 and a second labeling mechanism 3006.

The specimen introduction mechanism 3001, the specimen amount reduction mechanism 3002, and the observation liquid introduction mechanism 3003 are mechanisms for performing the steps described above as the specimen introduction step S100, the specimen amount reduction step S200, and the observation liquid introduction step S300, respectively. The first labeling mechanism 3005 and the second labeling mechanism 3006 are mechanisms for performing the steps described above as the first labeling step and the second labeling step, respectively.

The apparatus can further include a holding mechanism for holding a liquid including the observation liquid on the array plate. The holding mechanism may be included in the array plate, or may be provided separately from the array plate. As the holding mechanism, a frame provided on the array plate can be given, or a container that can store the array plate therein can be given.

Further, the apparatus can also include a mechanism for tilting the array plate or the holding mechanism with respect to a horizontal plane in order to facilitate the sucking of a liquid from the holding mechanism. The mechanism for tilting can be configured to press the array plate or the holding mechanism vertically downward. When the array plate or the holding mechanism is pressed by a distal end of a nozzle, the array plate can be tilted with respect to the horizontal plane. Specifically, at least any one of a pipette tip or a needle can be used to press the array plate and the holding mechanism. As the mechanism for tilting, an elastic member such as a leaf spring or a torsion spring can be included in a base for supporting the array plate or the holding mechanism.

In order to facilitate the sucking of the liquid, the holding mechanism may be set to have the lowest point. The phrase "have the lowest point" means that, when the holding mechanism is tilted by the above-mentioned mechanism, the holding mechanism is set so that one of vertexes thereof or one of parts thereof comes to a position lower than other points. With such a design, when the holding mechanism is tilted, the liquid is collected to one point to be easily sucked. The holding mechanism is set to have the lowest point, and hence a bottom surface of the mechanism for holding the observation liquid can be set to have any shape in consideration of the easiness of sucking of the liquid. For example, the shape of the bottom surface may be not only a general quadrangle, but also a triangle, a pentagon, other polygons, a sector, a circle, an ellipse, or any other shapes.

Further, the present invention provides, as further one embodiment, an analysis apparatus including: a placement unit on which an array plate is to be placed, the array plate including, on one surface thereof, a plurality of spots each containing a biological substance; a holder configured to hold a liquid so that the one surface and the liquid are brought into contact with each other; a liquid feeder/discharger configured to introduce the liquid to a region of the holder in which the liquid is held, or discharge the liquid held by the holder; a moving unit configured to move the liquid feeder/discharger with respect to the placement unit; an optical system configured to apply light to the plurality of spots to detect light emitted from the plurality of spots; a scanner configured to move the optical system with respect to the placement unit; and a controller configured to control a time to execute each of a specimen introduction step of bringing a specimen and the plurality of spots into contact with each other to cause a part of the plurality of spots and a target contained in the specimen to react with each other, a specimen amount reduction step of reducing an amount of the specimen in contact with the plurality of spots, an observation liquid introduction step of bringing the one surface into contact with an observation liquid so that the plurality of spots are brought into contact with the observation liquid, and an acquisition step of acquiring optical information of the plurality of spots under a state in which the plurality of spots are in contact with the observation liquid, the controller further being configured to control a time to execute at least any one of a first labeling step of labeling the target and a second labeling step of labeling the part of the plurality of spots reacted with the target, the first labeling step being performed before the specimen introduction step, the second labeling step being performed after the specimen amount reduction step.

In this embodiment, the controller can control the placement unit, the liquid feeder/discharger, the moving unit, the optical system, and the scanner in order to execute the specimen introduction step S100, the specimen amount reduction step S200, the observation liquid introduction step S300, and the first labeling step S1000.

At this time, the controller can execute, in parallel to execution of the acquisition step for a first array plate, at least any one of the specimen introduction step S100, the specimen amount reduction step S200, the observation liquid introduction step S300, and the first labeling step S1000 for a second array plate that is different from the first array plate.

Further, in this embodiment, the controller can control the placement unit, the liquid feeder/discharger, the moving unit, the optical system, and the scanner in order to execute the specimen introduction step S100, the specimen amount reduction step S200, the observation liquid introduction step S300, and the second labeling step S2000.

At this time, the controller can execute, in parallel to execution of the acquisition step for a first array plate, at least any one of the specimen introduction step S100, the specimen amount reduction step S200, the observation liquid introduction step S300, and the second labeling step S2000 for a second array plate that is different from the first array plate.

The analysis apparatus according to this embodiment is described with reference to FIG. 3(b). A placement unit 1001 is a unit on which an array plate is to be placed. The array plate includes, on its first surface, a plurality of spots each containing a biological substance. A holder 1015 holds a liquid so that the liquid is brought into contact with at least the first surface of the array plate. The holder 1015 may be included in the array plate, may be provided separately from the array plate, or may be provided in the placement unit 1001.

A liquid feeder/discharger 1002 introduces a predetermined liquid to the holder 1015 or discharges the liquid held by the holder 1015. The liquid feeder/discharger 1002 can include a nozzle capable of sucking and discharging a liquid, and can further include a specimen bottle for storing a specimen, a reagent liquid bottle for storing a reagent liquid, and an observation liquid bottle for storing an observation liquid. The nozzle is a general term for devices used for sucking and discharging a liquid. Examples of the nozzle include a pipette tip, a needle, a pipette, a syringe, a pump, and a combination thereof. However, when the liquid is discharged as a waste liquid, it is preferred to use a vacuum pump in combination so as to keep a waste liquid bottle at a negative pressure in order to prevent backflow of the waste liquid. When the vacuum pump is used, the waste liquid is discharged through use of a solenoid valve line as required.

A moving unit 1013 moves the liquid feeder/discharger 1002 with respect to the placement unit 1001. An example of the moving unit is a stage for moving the nozzle.

An optical system 1003 applies excitation light to the spot of the array plate 100 on the placement unit 1001, and detects generated fluorescent light. A scanner 1014 scans, when a region that can be observed by the optical system 1003 is limited, the optical system 1003, the placement unit 1001, or a part of the optical system 1003 or the placement unit 1001 in order to observe the optical information of the entire required region of the array plate. The scanner 1014 may scan the placement unit 1001, or scan the optical system 1003. As another example, the scanner 1014 may scan only a part of the optical system 1003, and scan only the excitation light source. With the optical system 1003 being present on the second surface 101-2 side different from the first surface 101-1 of the array plate 100, interference between the optical system 1003 and the nozzle included in the liquid feeder/discharger 1002 can be avoided. Further, a space can be effectively used, and the entire apparatus can be advantageously downsized.

The phrase "move with respect to the placement unit 1001" refers to a movement performed so that, in order to introduce or discharge a liquid to or from the array plate placed on the placement unit 1001, or to acquire the optical information of the spot of the array plate placed on the placement unit 1001, a distance between the liquid feeder/discharger 1002 or the optical system 1003 and the placement unit is decreased or a distance between the liquid feeder/discharger 1002 or the optical system 1003 and the placement unit 1001 is increased.

A control system 1004 controls at least the order of execution of steps related to constituent elements of an analysis apparatus 4001. The constituent elements of the analysis apparatus 4001 include the placement unit 1001, the liquid feeder/discharger 1002, the moving unit 1013, the optical system 1003, and the scanner 1014.

Further, the control system 1004 controls at least the order of execution of steps related to constituent elements of an analysis method. The analysis method is, as illustrated in FIG. 1(a), an analysis method including the first labeling step, specifically, including the first labeling step S1000, the specimen introduction step S100, the specimen amount reduction step S200, the observation liquid introduction step S300, and the acquisition step S400, and, as illustrated in FIG. 1(b), an analysis method including the second labeling step S2000, specifically, including the specimen introduction step S100, the specimen amount reduction step S200, the second labeling step S2000, the observation liquid introduction step S300, and the acquisition step S400. The analysis method is only required to include at least any one of the first labeling step S1000 and the second labeling step S2000, but the analysis method may include both of the labeling steps. Accordingly, in some cases, the control system 1004 is also referred to as "sequencer" or "controller". In other words, the control system 1004 controls at least a time to execute each of the steps related to the constituent elements of the analysis method, and the control system 1004 controls at least a time to execute each of the steps related to the constituent elements of the analysis method.

The control system 1004 can control the placement unit, the liquid feeder/discharger, the moving unit, the optical system, and the scanner in order to execute the specimen introduction step S100, the specimen amount reduction step S200, the observation liquid introduction step S300, and the first labeling step S1000.

At this time, the controller can execute, in parallel to execution of the acquisition step S400 for a first array plate, at least any one of the specimen introduction step S100, the specimen amount reduction step S200, the observation liquid introduction step S300, and the first labeling step S1000 for a second array plate that is different from the first array plate.

Further, in this embodiment, the control system 1004 can control the placement unit 1001, the liquid feeder/discharger 1002, the moving unit 1013, the optical system 1003, and the scanner 1014 in order to execute the specimen introduction step S100, the specimen amount reduction step S200, the observation liquid introduction step S300, and the second labeling step S2000.

At this time, the controller can execute, in parallel to execution of the acquisition step S400 for a first array plate, at least any one of the specimen introduction step S100, the specimen amount reduction step S200, the observation liquid introduction step S300, and the first labeling step S1000 for a second array plate that is different from the first array plate.

The control system 1004 has a function of a computer. The control system 1004 may be formed integrally with a desktop personal computer (PC), a laptop PC, a tablet PC, a smartphone, or the like. The control system 1004 controls the placement unit 1001, the liquid feeder/discharger 1002, the moving unit 1013, the optical system 1003, and the scanner 1014 so that the steps of the analysis method can be executed. The analysis method includes: the specimen introduction step of bringing the specimen and the plurality of spots into contact with each other to cause a part of the plurality of spots to react with the target; the specimen amount reduction step S200 of reducing the amount of the specimen in contact with the plurality of spots; the observation liquid introduction step S300 of bringing the first surface of the array plate into contact with the observation liquid so that the plurality of spots are brought into contact with the observation liquid; and the acquisition step of acquiring the optical information of the plurality of spots under a state in which the plurality of spots are in contact with the observation liquid. The analysis method further includes at least any one of the first labeling step S1000 and the second labeling step S2000. The first labeling step S1000 is a step of labeling the target before the specimen introduction step. The second labeling step S2000 is a step of labeling the spot that has reacted with the target, which is performed after the specimen amount reduction step S200.

The control system 1004 includes, in order to implement functions as a computer configured to perform arithmetic operation and storage, a CPU 1005, a RAM 1006, a ROM 1007, and an HDD 1008. CPU, RAM, ROM, and HDD stand for a central processing unit, a random-access memory, a read-only memory, and a hard disk drive, respectively. Further, the control system 1004 includes a communication interface (I/F) 1009, a display device 1010, and an input device 1011. The CPU 1005, the RAM 1006, the ROM 1007, the HDD 1008, the communication I/F 1009, the display device 1010, and the input device 1011 are connected to each other via a bus 1012. The display device 1010 and the input device 1011 may be connected to the bus 1012 via a drive device (not shown) for driving those devices.

In FIG. 3(b), the various components forming the control system 1004 are illustrated as an integrated device, but a part of the functions of those components may be implemented by an external device. The display device 1010 and the input device 1011 may be external devices different from the components implementing the functions of the computer including the CPU 1005.

The CPU 1005 is configured to perform predetermined operations in accordance with programs stored in, for example, the ROM 1006 and the HDD 1008, and also has a function of controlling each component of the control system 1004.

The RAM 1006 is built from a volatile storage medium, and is configured to provide a temporary memory area required for the operations of the CPU 1005. The ROM 1007 is built from a non-volatile storage medium, and is configured to store required information for programs to be used for the operations of the control system 1004. The CPU 1005 loads the program stored in the ROM 1007 to the RAM 1006 to execute the program, thereby implementing the functions of the placement unit 1001, the liquid feeder/discharger 1002, and the optical system 1003. The HDD 1008 is formed of a non-volatile storage medium, and is a storage device for storing information on the number of spots and positions thereof of the array plate, and the light intensity information or the spectral information.

The communication I/F 1009 is a communication interface based on a standard including Wi-Fi (trademark) and 4G, and is a module for communicating to and from another device. The display device 1010 is, for example, a liquid crystal display or an organic light emitting diode (OLED) display, and is used for displaying moving images, still images, and characters, for example. The input device 1011 is, for example, a button, a touch panel, a keyboard, or a pointing device, and is used by a user to operate the control system 1004. The display device 1010 and the input device 1011 may be integrally formed as a touch panel.

In addition to the configuration illustrated in FIG. 3(b), devices may be added, and some devices may be omitted. Further, some devices may be replaced with other devices having similar functions. Moreover, some of the functions may be provided by another device via a network, and functions constituting this embodiment may be implemented in a manner distributed in a plurality of devices. The HDD 1008 may be replaced with a solid state drive (SSD) using a semiconductor element, including a flash memory, or may be replaced with a cloud storage.

The control system 1004 can control the operation of the optical system 1003 and the operations of the liquid feeder/discharger 1002 and others so as to be performed in parallel to each other. That is, in parallel to the execution of the acquisition step for the first array plate, the control system 1004 can execute and control, for the second array plate, steps including at least any one of the specimen introduction step, the specimen amount reduction step S200, the observation liquid introduction step S300, the first labeling step S1000, and the second labeling step S2000. In this manner, analysis can be performed simultaneously for a plurality of array plates, and thus the analysis time period is saved.

### <Program>

The present invention provides, as one embodiment, a program for causing a control system in the analysis apparatus to perform the above-mentioned series of controls. Further, the present invention provides a program for causing a computer to execute the above-mentioned method.

Now, with reference to the drawings, an embodiment of the present invention is described. The present invention is not limited to the following description.

With reference to FIG. 4(a) and FIG. 4(b), the analysis apparatus 4001 according to this embodiment and an arrangement of the analysis apparatus 4001 on a desk are described.

FIG. 4(a) shows the substrate 101 that is specifically a glass slide, and the spots 103. One type of biological substance is immobilized on each spot. The array plate 100 includes the substrate 101 and the spots 103. The frame 105 serving as the holding mechanism is provided on the array plate 100, and is one example of the holder 1015. An observation liquid 107 is held on the inner side of the frame 105.

A pipette operation unit 117 is mounted to a vertical stage 113 through intermediation of a pipette support 115. The vertical stage 113 is mounted to a horizontal stage 111. The vertical stage 113 is movable in a vertical direction, and the horizontal stage 111 is movable in a horizontal direction. Accordingly, the pipette support 115, the pipette operation unit 117, a pipette tip mounting/removing portion 119, and a pipette tip 151-1 are movable in the vertical direction and the horizontal direction.

The pipette operation unit 117 and the pipette tip mounting/removing portion 119 are each an example of the liquid feeder/discharger 1002, and the vertical stage 113 and the horizontal stage 111 are each an example of the moving unit 1013.

A pipette tip rack 121 is provided, and a state in which unused pipette tips (151-2, 151-3, ...) are arranged therein is shown.

A reagent liquid bottle 123 (123-1, 123-2) holds a reagent liquid, and an observation liquid bottle 124 holds an observation liquid. A reagent liquid 125 (125-1, 125-2) and an observation liquid 107 are provided. The reagent liquid refers to a liquid to be added to the specimen. In this embodiment, examples of the reagent liquid include a reaction liquid, a reaction stop liquid, a cleaning liquid, and a labeling substance.

A specimen bottle 141 and a specimen 143 are provided. A waste liquid bottle 127 and a waste liquid 153 are provided. A waste tip box 129 and a waste tip 155 are provided.

In FIG. 4(a), two reagent liquid bottles are drawn for the sake of convenience, but, in an actual case, an appropriate number of reagent liquid bottles may be prepared as required. Three pipette tips are drawn for the sake of convenience as well, but, in an actual case, a required number of pipette tips are prepared as appropriate.

A confocal optical unit 221 is provided as an example of the optical system 1003. The optical unit 221 is mounted to a horizontal stage 223, and is movable in the horizontal direction. The horizontal stage 223 is an example of the scanner 1014.

In this embodiment, an example in which a fluorescent substance is used as the labeling substance is described.

The optical unit 221 is present on the second surface side of the array plate 100.

Components forming the optical unit 221 are described below. The optical unit 221 includes a semiconductor laser 201 for emitting light having a wavelength of 670 nm, a collimating lens 203, a band pass filter 205 for transmitting light having a wavelength of around 670 nm, a long pass filter 207 having a cut-on wavelength of 685 nm, and an objective lens 209. The light emitted from the semiconductor laser passes through the collimating lens 203 and the band pass filter 205 to be reflected by the long pass filter 207, and is collected by the objective lens 209 to the spot 103 on the first surface 101-1 of the array plate 100.

The optical unit 221 further includes a band pass filter 211 for transmitting light having a wavelength of around 716 nm, an imaging lens 213, a pin hole 215, and a photomultiplier tube 217. Light emitted from the spot passes through the objective lens 209 and the long pass filter 207, and is collected by the imaging lens 213. Light that has passed through the pin hole 215 is detected by the photomultiplier tube 217.

When the optical unit 221 is scanned by the horizontal stage 223 along the array plate 100, a two-dimensional image of the plurality of spots of the array plate 100 is acquired.

According to this embodiment, the optical information of the spots can be obtained under a state in which the observation liquid 107 is held by the holding mechanism provided on the array plate 100 and the spots 103 are in contact with the observation liquid.

A mode in which the analysis apparatus according to this embodiment is arranged on the desk is illustrated in FIG. 4(b).

FIG. 4(b) shows the specimen analysis apparatus 4001. The analysis apparatus 4001 is arranged on a work desk 4101. The analysis apparatus 4001 according to this embodiment includes a door 4003 for opening and closing a port for use in inserting and removing the reagent into and out of the apparatus. There may be provided an interlock mechanism for stopping a stage for dispensing, or for stopping light emission of the laser light source when the door 4003 is opened during the operation of the analysis apparatus 4001. The analysis apparatus 4001 includes an emergency stop switch 4005 to be activated when an operator recognizes other abnormalities.

A liquid crystal display 4051 serving as the display device, a keyboard 4053, and a mouse 4055 correspond to an input unit for giving instructions of measurement conditions and higher order instructions from an operator with respect to the controller (not shown). The controller may be in a mode of being built into the analysis apparatus 4001, or in a mode of being provided in a computer of a local PC or on a cloud. The local PC may be arranged on or under the work desk 4101. The controller can control the time to execute each of the specimen introduction step S100, the specimen amount reduction step S200, the observation liquid introduction step S300, and the acquisition step. Further, according to this embodiment, specimen analysis can be executed under an environment having good workability.

### [Example 1]

The analysis method according to the present invention is described. Here, there is exemplified a case in which, for the purpose of analyzing a phosphorylation pathway, a cell extract is used as the specimen, and the target is a phosphorylated enzyme. The array plate includes spots each containing, as the biological substance, a protein that is a substrate whose phosphorylation reaction is specifically catalyzed by a phosphorylated enzyme substrate. A fluorescent substance is used as the labeling substance.

FIGS. 5 to FIGS. 7 are views for illustrating process steps in Example 1.

### (1) Preparation (FIG. 5(a))

The array plate 100 in which, on the substrate 101, the spots 103 having a plurality of types of proteins immobilized thereon, respectively, are arranged in an array, and the frame 105 serving as the holding mechanism is provided around the spots 103 is arranged at a predetermined position.

The pipette tip rack 121 including the unused pipette tips 151 (151-1, 151-2, 151-3, ...) is arranged at a predetermined position. Three pipette tips are illustrated in FIG. 5(a) for the sake of convenience.

The reagent liquid bottles 123 (123-1, 123-2, ...) holding the reagent liquids 125 (125-1, 125-2, ...) required for reactions, and the observation liquid bottle 124 holding the observation liquid 107 are arranged at predetermined positions. Although two reagent liquid bottles are illustrated in FIG. 5(a) for the sake of convenience, in an actual case, a required number of reagent liquid bottles is used.

In this Example, the reagent liquid 125-1 contains a phosphorylation promoting component 125-10. The reagent liquid 125-2 is a liquid containing a fluorescent dye (Alexa Flour 680) conjugated secondary antibody, which is the fluorescent substance. The fluorescent dye conjugated secondary antibody corresponds to the labeling substance 2001. The observation liquid 107 is a glycerol solution. In addition, although not shown, in some cases, a chemical liquid container is set so that a required solution, such as a phosphorylation reaction stop liquid, a TBST, a primary antibody liquid, an anti-fading agent, or pure water, can be supplied.

Further, the specimen bottle 141 containing the specimen 143 to be analyzed is arranged at a predetermined position. The specimen 143 contains the target 2000. In this Example, the specimen is obtained by dissolving human-derived model cells after culturing.

An empty waste liquid bottle 127 and an empty waste tip box 129 are installed.

### (2) Mounting of Pipette Tip (FIG. 5(b))

The horizontal stage 111 and the vertical stage 113 are controlled so that the pipette tip 151-1 is mounted to the pipette tip mounting/removing portion 119.

### (3) Aspirating of Specimen (FIG. 5(c))

The horizontal stage 111 and the vertical stage 113 are controlled so that the pipette tip 151-1 is moved into the specimen bottle 141, and the pipette operation unit 117 is controlled so that the specimen 143 is aspirated.

### (4) Mixing of Specimen with Phosphorylation Reaction Liquid (FIG. 6(d))

The pipette operation unit 117 is controlled so that the specimen 143 is aspirated and is discharged to the reagent liquid bottle 123-1. A reagent liquid 145 is obtained by mixing the specimen 143 with the reagent liquid 125-1 containing the phosphorylation promoting component 125-10. As required, when the reagent liquid and the specimen are mixed with each other, the pipette tip 151-1 is used for stirring. The reaction between the specimen and the phosphorylation reaction promoting component may progress over time after the mixing, and hence it is preferred that the mixing be performed immediately before the mixture is brought into contact with the spots.

### (5) Aspirating of Reagent Liquid (FIG. 6(e))

The horizontal stage 111 and the vertical stage 113 are controlled so that the pipette tip 151-1 is moved into the reagent liquid bottle 123-1, and the pipette operation unit 117 is controlled so that the reagent liquid 145 is aspirated.

### (6) Supply of Reagent Liquid (FIG. 6(f))

The horizontal stage 111 and the vertical stage 113 are controlled so that the pipette tip 151-1 is moved to a position above the array plate 100, and the pipette operation unit 117 is controlled so that the reagent liquid 145 is supplied onto the spots 103.

### (7) Phosphorylation Reaction (not shown)

The array plate 100 is left still for about five hours so that the phosphorylation reaction is promoted.

### (8) Reduction of Reagent Liquid (FIG. 7(g))

The horizontal stage 111 and the vertical stage 113 are controlled so that a distal end of the pipette tip 151-1 is moved to a position immediately above the array plate 100, and the pipette operation unit 117 is controlled so that the reagent liquid 145 is aspirated.

### (9) Disposal of Pipette Tip (FIG. 7(h))

The horizontal stage 111 and the vertical stage 113 are controlled so that the pipette tip 151-1 is moved to a position above the waste liquid bottle 127, and the pipette operation unit 117 is controlled so that the reagent liquid 145 is discharged. After that, the pipette tip 151-1 is moved to a position above the waste tip box 129 so as to be disposed of.

### (10) Stop of Phosphorylation Reaction (not shown)

With methods similar to Items (2), (5), (6), (8), and (9), supply and reduction of a phosphorylation reaction stop liquid are performed.

### (11) Cleaning (not shown)

For cleaning, with methods similar to Items (2), (5), (6), (8), and (9), supply and reduction of a TBST are performed.

### (12) Introduction of Primary Antibodies (not shown)

With methods similar to Items (2), (5), (6), (8), and (9), the primary antibody liquid is supplied, the liquid is left to stand for one hour, and the primary antibody liquid is reduced. Thus, the primary antibodies are introduced to the phosphorylated proteins.

### (13) Cleaning (not shown)

For cleaning, with methods similar to Items (2), (5), (6), (8), and (9), supply and reduction of a TBST are performed.

### (14) Introduction of Secondary Antibodies (FIG. 7(i))

With methods similar to Items (2), (5), (6), (8), and (9), the reagent liquid 125-2, which is the fluorescent dye conjugated secondary antibody liquid, is supplied through use of the pipette tip 151-2, the liquid is left to stand for one hour, and the reagent liquid 125-2 is reduced. Through this process, fluorescent dye conjugated secondary antibodies are introduced to the phosphorylated proteins, and thus introduction of the labeling substance to the spot containing the protein that has reacted with the phosphorylated enzyme contained in the specimen is completed.

### (15) Cleaning (not shown)

For cleaning, with methods similar to Items (2), (5), (6), (8), and (9), supply and reduction of a TBST are performed.

### (16) Supply of Observation Liquid (FIG. 8(j))

With methods similar to Items (2), (5), and (6), the observation liquid 107 is supplied.

Next, a fluorescence detection step is described with reference to FIG. 9. FIG. 9 is a view for illustrating an optical detection step.

The observation liquid 107 is loaded on the inner side of the frame 105 of the array plate 100.

Light emitted from the semiconductor laser 201 passes through the collimating lens 203 and the band pass filter 205, is reflected by the long pass filter 207, and passes through the objective lens 209 so as to be collected to the spot 103 on the first surface 101-1 of the array plate 100.

The fluorescent substance has been introduced to the spot containing the protein that has reacted with the phosphorylated enzyme contained in the specimen, and hence the spot emits fluorescent light. The fluorescent light emitted from the spot 103 passes through the objective lens 209 and the long pass filter 207, and is collected by the imaging lens 213. Light passing through the pin hole 215 is detected by the photomultiplier tube 217.

The optical unit 221 is scanned along the array plate 100 by the horizontal stage 223 so that a fluorescence two-dimensional image of the array plate 100 is acquired.

In this Example, as the observation liquid, a glycerol solution having a refractive index of 1.4 or more, which is close to that of glass, is used. Accordingly, stray light to be caused by reflected light is reduced as compared to a case in which no observation liquid is used, and the SN ratio can be improved. Further, from the step of bringing the specimen and the plurality of spots into contact with each other to the step of acquiring optical information of the plurality of spots under a state in which the spots are in contact with the observation liquid, the steps are continuously performed without going through a drying step, and hence improvement of the throughput is expected. Further, adverse effects to be caused by drying unevenness can be suppressed.

The structure of the frame serving as the holding mechanism is described with reference to FIGS. 10.

FIG. 10(a-1), FIG. 10(b-1), and FIG. 10(c-1) are top views of the array plate 100, and FIGS. 10(a-2), FIG. 10(b-2), and FIG. 10(c-2) are sectional views of dotted circuit portions of the corresponding top views.

To the array plate 100 illustrated in FIG. 10(a-1) and FIG. 10(a-2), as illustrated in FIG. 10(b-1) and FIG. 10(b-2), a quadrilateral rubber 501 and a frame 503 are mounted. The frame 503 has a recessed part to be brought into contact with the rubber 501. Further, as illustrated in FIG. 10(c-1) and FIG. 10(c-2), the frame is formed by fitting retaining members 505 to side wall portions such that the frame 503 and the substrate 101 crush the rubber. A recess may be formed in the frame 503 so that the retaining members 505 can be easily fitted.

The structure of the frame is not limited thereto, and the frame may have any shape as long as the frame can hold a liquid.

### [Example 2]

A case in which the target of the specimen is an antigen and the determination on the presence or absence and/or the quantification of the antigen is performed is described. In this case, it is effective to use an array plate including spots each containing, as the biological substance, an antibody that specifically identifies the antigen. This array plate is hereinafter also referred to as "antibody array plate."

A specimen extracted from a living body, as the reagent liquid, reagent liquids containing a biotinylated detection antibody cocktail and a fluorescent-labeled streptavidin, a cleaning liquid, and an observation liquid are prepared.

The reaction process is as follows.

First, the specimen is brought into contact with the first surface of the antibody array plate. Under this state, the antibody array plate is left still for a predetermined time period so that the antibodies contained in the antibody array plate react with specific antigens.

Next, after cleaning, a cocktail of biotinylated detection antibodies in which biotin is bound to an antibody having specificity for the antigen, is arranged on the first surface of the antibody array plate.

Further, after cleaning, a fluorescent-labeled streptavidin, which is a fluorescent substance bound with a streptavidin having the property of binding to biotin, is supplied to the array plate, and the fluorescent substance is introduced to the spot that has reacted with the target.

Finally, the liquid on the first surface of the array plate is replaced with the observation liquid, and optical information is obtained similarly to Example 1.

With this Example, detection of the presence or absence and quantification of the target contained in the specimen are efficiently performed.

Similarly to Example 1, in this Example, as the observation liquid, a glycerol solution having a refractive index of 1.4 or more, which is close to that of glass, is used. Accordingly, stray light to be caused by reflected light is reduced as compared to a case in which no observation liquid is used, and the SN ratio can be improved. Further, from the step of bringing the specimen and the plurality of spots into contact with each other to the step of acquiring optical information of the plurality of spots under a state in which the spots are in contact with the observation liquid, the steps are continuously performed without going through a drying step, and hence improvement of the throughput is expected.

Further, adverse effects to be caused by drying unevenness can be suppressed.

### [Example 3]

For the purpose of acquiring information on immunity of the specimen, an array plate including spots containing, as the biological substance, a plurality of antigen molecules is used. This array plate is hereinafter also referred to as "antigen array plate."

When an antibody specific to the antigen of the spot is present in the specimen, this antibody reacts with the antigen.

In this Example, the specimen is human serum and the target is an IgG antibody. The specimen, as the reagent liquid, a reagent liquid containing a biotinylated anti-human IgG antibody cocktail and a reagent liquid containing a fluorescence-labeled streptavidin, a cleaning liquid, and an observation liquid are prepared.

The process is as follows.

First, the specimen is brought into contact with the first surface of the antigen array plate. Under this state, the antigen array plate is left still for a predetermined time period so that the antigen of the antigen array plate reacts with the antibody contained in the specimen.

Next, after cleaning, the biotinylated anti-human IgG antibody cocktail is arranged on the first surface of the antibody array plate so that a secondary antibody is bound to the antibody bound with the antigen.

Further, after cleaning, the fluorescent-labeled streptavidin formed of streptavidin having the property of strongly binding to biotin is supplied so that the secondary antibody is labeled.

Finally, the liquid on the antigen array plate is replaced with the observation liquid, and fluorescence detection is performed similarly to Example 1.

With this Example, the immune state of the specimen can be efficiently grasped.

Similarly to Example 1, in this Example, as the observation liquid, a glycerol solution having a refractive index of 1.4 or more, which is close to that of glass, is used. Accordingly, stray light to be caused by reflected light is reduced as compared to a case in which no observation liquid is used, and the SN ratio can be improved. Further, from the step of bringing the specimen and the plurality of spots into contact with each other to the step of acquiring optical information of the plurality of spots under a state in which the spots are in contact with the observation liquid, the steps are continuously performed without going through a drying step, and hence improvement of the throughput is expected.

Further, adverse effects to be caused by drying unevenness can be suppressed.

### [Example 4]

When the activity of a protein kinase is analyzed, a protein array plate is used. The protein array plate is an array plate including spots each containing, as the biological substance, a protein serving as a substrate for a protein kinase. As another example, a peptide array plate is used. The peptide array plate is an array plate including spots each containing, as the biological substance immobilized on the spot, a peptide having a substrate site sequence.

The process and effects in this case are as those described in Example 1.

### [Example 5]

The optical system in the analysis apparatus according to the present invention is described with reference to FIGS. 11.

FIG. 11(a) shows the same arrangement as that described in Example 1, in which fluorescent light is detected from the back surface side of the glass slide, which is the second surface side of the array plate. The arrangement of the optical system is not limited thereto, and can take various forms as described below.

In FIG. 11(b), an objective lens 309 is arranged on the first surface 101-1 side of the array plate 100, that is, on the front surface side of the substrate 101, and fluorescent light is detected from the same side. Even with this arrangement, stray light to be caused by reflected light can be reduced as compared to the case in which no observation liquid is used, and hence the SN ratio can be improved.

Further, in FIG. 11(c), the array plate 100 is arranged in a transparent container 401, and the container 401 is filled with the observation liquid 107. An objective lens 409 is provided, and fluorescent light transmitted through the substrate 101 and the container 401 is detected. Even with this arrangement, stray light to be caused by reflected light can be reduced as compared to the case in which no observation liquid is used, and hence the SN ratio can be improved. Further, there is no need to provide a frame on the array plate 100, and hence as compared to FIG. 11(a) and FIG. 11(b), there is an advantage in that the spots are arranged on the glass slide without any region limitation. Further, as illustrated in FIG. 11(d), fluorescent light may be detected from the first surface 101-1 side of the array plate.

### [Example 6]

FIGS. 12 and FIGS. 13 are views for illustrating the method of reducing the reagent liquid through use of a substrate tilting mechanism in the specimen analysis apparatus according to the present invention.

FIGS. 12 are views for illustrating a support base for supporting the array plate. FIG. 12(a) is a top view including a support portion 601, an array plate support portion 603, a leaf spring 605, and a retaining portion 607. The support base or the array plate support portion 603 illustrated in FIG. 12(a) and the subsequent figures is an example of the placement unit 1001. FIG. 12(b) is a sectional view of a part A-A, and FIG. 12(c) is a sectional view of a part B-B.

FIGS. 13 are views for illustrating a method of discharging a liquid.

In FIG. 13(a), the array plate support portion 603 supports the array plate 100 in a state of containing a reagent liquid 126. The vertical stage (not shown) is controlled so that the pipette tip 151 is moved downward. Thus, the inner side of the frame 105 is pressed by the distal end of the pipette tip 151. As a result, as illustrated in FIG. 13(b), the array plate 100 is tilted.

Next, as illustrated in FIG. 13(c), the pipette operation unit (not shown) is controlled so that the pipette tip 151 aspirates the reagent liquid 126.

After that, the vertical stage (not shown) is controlled so that the pipette tip 151 is moved upward. At this time, the array plate 100 returns to its original position due to a spring force of the leaf spring 605.

According to this Example, the amount of liquid remaining when the liquid is discharged is reduced. As a result, effects such as stabilization of the process and reduction in the number of times of cleaning can be obtained.

### [Example 7]

FIGS. 14 are views for illustrating a second substrate tilting mechanism in the specimen analysis apparatus according to the present invention.

FIGS. 14 are views for illustrating the support base for supporting the array plate. FIG. 14(a) is a top view including the support portion 601, an array plate support portion 701, a rotary shaft 703, a torsion spring 705, and the retaining portion 607. FIG. 14(b) is a sectional view of a part A-A, and FIG. 14(c) is a sectional view of a part B-B.

The operation of the method of discharging the liquid is similar to that of Example 8.

According to this Example, similarly to Example 8, the amount of liquid remaining when the reagent liquid is discharged is reduced. As a result, effects such as stabilization of the process and reduction in the number of times of cleaning can be obtained.

### [Example 8]

FIGS. 15 are views for illustrating a third substrate tilting mechanism in the specimen analysis apparatus according to the present invention.

FIGS. 15 are views for illustrating the support base for supporting the array plate. The basic structure is similar to that of FIGS. 14. FIG. 15(a) is a top view. FIG. 15(a) is different from FIGS. 14 in that an opening formed in an array plate support portion 801 for use in supporting the array plate is rotated within a plane, that is, each side of the opening is not parallel to each side of the array plate support portion 801.

FIG. 15(b) is a top view in a case in which the array plate 100 is installed.

The operation of the method of discharging the reagent liquid is similar to that of Example 6.

According to this Example, similarly to Example 6, the amount of liquid remaining when the reagent liquid is discharged is reduced. As a result, effects such as stabilization of the process and reduction in the number of times of cleaning can be obtained.

Further, the lowest point comes to the inner side of the frame when the array plate is tilted. Thus, the reagent liquid is aspirated at the lowest point, and thus the remaining liquid amount is further reduced as compared to that of Example 6.

### [Example 9]

FIG. 16 is a view for illustrating the structure of a second frame in the specimen analysis apparatus according to the present invention.

The basic structure is similar to that of FIGS. 10.

FIG. 16 is different from FIGS. 10 in that a pentagonal rubber 901 and a pentagonal frame 903 are mounted to the array plate 100. The pentagonal frame 903 has a recessed part to be brought into contact with the rubber 901. In this manner, even when the array plate is tilted by the method of Example 8 or Example 9, the lowest point comes inside of the frame.

### [Example 10]

Through use of the method according to the present invention, a phosphorylated enzyme contained in the specimen was detected. A glass slide was used as the substrate, and a phosphorylated substrate was immobilized on a circular spot having a diameter of 1 mm. Circular spots were arranged at a pitch of 2 mm. A specimen containing the phosphorylated enzyme was brought into contact with the spots. After that, the labeling substance was introduced by labeling the phosphorylated spots with a dye (Alexa Fluor 680). The observation liquid was brought into contact with the first surface of the array plate including the spots, and, under a state in which the observation liquid was in contact with the first surface, fluorescent light generated by applying semiconductor laser light having a wavelength of 670 nm was measured so that an image was created. Results are shown in FIG. 17. FIG. 17 shows an optical information piece 800 obtained in Example of the subject application. The optical information piece 800 includes optical information pieces 803-11 to 803-18 of the plurality of spots, and a background 802. FIG. 17 further shows a schematic view 900 of the array plate used in this Example. The schematic view 900 includes a plurality of spots 903-11 to 103-36, and a glass slide 901.

The present disclosure is not limited to the embodiments described above, and various changes and modifications can be made without departing from the spirit and scope of the present disclosure. The following claims are appended hereto in order to make the scope of the present disclosure public.

The present application claims priority based on Japanese Patent Application No. 2021-115910 filed on July 13, 2021 and Japanese Patent Application No. 2022-094140 filed on June 10, 2022, and the entire contents thereof are incorporated herein by reference.

### [Reference Signs List]

S1000: first labeling step
S2000: second labeling step
S100: specimen introduction step
S200: specimen amount reduction step
S300: observation liquid introduction step
S400: acquisition step
100: array plate
101: substrate
103: spot
105: frame
107: observation liquid
143: specimen
1001: placement unit
1002: liquid feeder/discharger
1003: optical system
1004: control system
1013: moving unit
1014: scanner
1015: holder
2000: target
2001: labeling substance
2002: biological substance
3001: specimen introduction mechanism
3002: specimen amount reduction mechanism
3003: observation liquid introduction mechanism
3004: acquisition mechanism
3005: first labeling mechanism
3006: second labeling mechanism
4001: analysis apparatus
4003: door
4005: emergency stop switch
4051: liquid crystal display
4053: keyboard
4055: mouse
4101: work desk

## Claims

1. An analysis method of analyzing a specimen containing a target, through use of an array plate including, on one surface thereof, a plurality of spots each containing a biological substance, the analysis method comprising:
a specimen introduction step of bringing the specimen and the plurality of spots into contact with each other to cause a part of the plurality of spots and the target to react with each other;
a specimen amount reduction step of reducing an amount of the specimen in contact with the plurality of spots;
an observation liquid introduction step of bringing the one surface into contact with an observation liquid so that the plurality of spots are brought into contact with the observation liquid; and
an acquisition step of acquiring optical information of the plurality of spots under a state in which the plurality of spots are in contact with the observation liquid,
the analysis method further comprising at least any one of a first labeling step of labeling the target before the specimen introduction step and a second labeling step of labeling the part of the plurality of spots reacted with the target, the second labeling step being performed after the specimen amount reduction step.

2. The analysis method according to claim 1,
wherein the analysis method comprises the first labeling step, and
wherein the first labeling step includes performing labeling through use of a fluorescent substance.

3. The analysis method according to claim 1,
wherein the analysis method comprises the second labeling step, and
wherein the second labeling step includes performing labeling through use of a fluorescent substance.

4. The analysis method according to any one of claims 1 to 3, wherein the acquisition step includes:
applying excitation light to the plurality of spots; and
acquiring, as the optical information, at least any one of light intensity information and spectral information of fluorescent light emitted from the plurality of spots.

5. The analysis method according to claim 4, wherein the light intensity information and the spectral information are acquired in association with addresses of the plurality of spots in the array plate.

6. The analysis method according to claim 4 or 5, wherein the array plate has transmittance with respect to a wavelength of the excitation light.

7. The analysis method according to claim 4 or 6, wherein the array plate has transmittance with respect to a wavelength of the fluorescent light.

8. The analysis method according to any one of claims 4 to 7, wherein the acquisition step includes:
applying the excitation light to the plurality of spots from a back surface side of the one surface; and
detecting fluorescent light from the back surface side.

9. The analysis method according to any one of claims 1 to 8, wherein the observation liquid has a refractive index of 1.40 or more and 1.46 or less.

10. The analysis method according to any one of claims 1 to 9, wherein the observation liquid contains glycerol of 40 vol% or more and 90 vol% or less.

11. The analysis method according to any one of claims 1 and 3 to 10, wherein the second labeling step includes bringing at least any one reagent liquid and the plurality of spots into contact with each other.

12. The analysis method according to any one of claims 1 to 11, wherein the biological substance includes at least any one of a nucleic acid, a peptide, and a protein.

13. The analysis method according to any one of claims 1 to 11, wherein the biological substance includes a phosphorylated enzyme substrate.

14. The analysis method according to claim 13, wherein the reagent liquid includes a phosphorylation site recognition substance.

15. The analysis method according to any one of claims 1 to 14, further comprising a specimen information acquisition step of acquiring information on the specimen based on the optical information.

16. The analysis method according to any one of claims 1 to 15, wherein the observation liquid introduction step also serves as a part of the specimen amount reduction step.

17. The analysis method according to any one of claims 1 to 16, wherein the specimen in contact with the plurality of spots is replaced with the observation liquid in contact with the plurality of spots.

18. An analysis apparatus for analyzing a specimen containing a target, through use of an array plate including, on one surface thereof, a plurality of spots each containing a biological substance, the analysis apparatus comprising:
a specimen introduction mechanism configured to bring the specimen and the plurality of spots into contact with each other;
a specimen amount reduction mechanism configured to reduce an amount of the specimen in contact with the plurality of spots;
an observation liquid introduction mechanism configured to bring the one surface into contact with an observation liquid so that the plurality of spots are brought into contact with the observation liquid; and
an acquisition mechanism configured to acquire optical information of the plurality of spots under a state in which the plurality of spots are in contact with the observation liquid,
the analysis apparatus further comprising at least any one of a first labeling mechanism and a second labeling mechanism, the first labeling mechanism being configured to label the target and operate before the specimen introduction mechanism operates, the second labeling mechanism being configured to label the part of the plurality of spots reacted with the target and operate after the specimen amount reduction mechanism operates.

19. The analysis apparatus according to claim 18,
wherein the array plate has transmittance with respect to excitation light to be used in the acquisition mechanism, and
wherein the acquisition mechanism is configured to:
apply the excitation light to the plurality of spots from a back surface side of the one surface of the array plate; and
acquire, from the back surface side, the optical information of fluorescent light emitted from the plurality of spots.

20. The analysis apparatus according to claim 18 or 19, further comprising a holding mechanism configured to hold the observation liquid so that the plurality of spots are brought into contact with the observation liquid.

21. The analysis apparatus according to claim 20, further comprising a tilting mechanism configured to tilt at least any one of the array plate and the holding mechanism with respect to a horizontal plane.

22. The analysis apparatus according to claim 21, wherein the tilting mechanism is configured to press one of the array plate and the holding mechanism vertically downward.

23. The analysis apparatus according to claim 21 or 22, wherein the tilting mechanism includes at least any one of a pipette tip and a needle.

24. The analysis apparatus according to any one of claims 18 to 23, further comprising a mechanism configured to acquire information on the specimen based on the optical information.

25. An analysis apparatus comprising:
a placement unit on which an array plate is to be placed, the array plate including, on one surface thereof, a plurality of spots each containing a biological substance;
a holder configured to hold a liquid so that the one surface and the liquid are brought into contact with each other;
a liquid feeder/discharger configured to introduce the liquid to a region of the holder in which the liquid is held, or discharge the liquid held by the holder;
a moving unit configured to move the liquid feeder/discharger with respect to the placement unit;
an optical system configured to apply light to the plurality of spots to detect light emitted from the plurality of spots;
a scanner configured to move the optical system with respect to the placement unit; and
a controller configured to control a time to execute each of a specimen introduction step of bringing a specimen and the plurality of spots into contact with each other to cause a part of the plurality of spots and a target contained in the specimen to react with each other, a specimen amount reduction step of reducing an amount of the specimen in contact with the plurality of spots, an observation liquid introduction step of bringing the one surface into contact with an observation liquid so that the plurality of spots are brought into contact with the observation liquid, and an acquisition step of acquiring optical information of the plurality of spots under a state in which the plurality of spots are in contact with the observation liquid, the controller further being configured to control a time to execute at least any one of a first labeling step of labeling the target and a second labeling step of labeling the part of the plurality of spots reacted with the target, the first labeling step being performed before the specimen introduction step, the second labeling step being performed after the specimen amount reduction step.

26. The analysis apparatus according to claim 25, wherein the controller is configured to control the placement unit, the liquid feeder/discharger, the moving unit, the optical system, and the scanner in order to execute the specimen introduction step, the specimen amount reduction step, the observation liquid introduction step, and the first labeling step.

27. The analysis apparatus according to claim 26, wherein the controller is configured to execute, in parallel to execution of the acquisition step for a first array plate, at least any one of the specimen introduction step, the specimen amount reduction step, the observation liquid introduction step, and the first labeling step for a second array plate that is different from the first array plate.

28. The analysis apparatus according to claim 25, wherein the controller is configured to control the placement unit, the liquid feeder/discharger, the moving unit, the optical system, and the scanner in order to execute the specimen introduction step, the specimen amount reduction step, the observation liquid introduction step, and the second labeling step.

29. The analysis apparatus according to claim 28, wherein the controller is configured to execute, in parallel to execution of the acquisition step for a first array plate, at least any one of the specimen introduction step, the specimen amount reduction step, the observation liquid introduction step, and the second labeling step for a second array plate that is different from the first array plate.

30. A program for causing a computer to execute steps of the analysis method of any one of claims 1 to 17.
